# FASCICULE DE BREVET EUROPEEN

(11) **EP 3 218 639 B1**
(45) Date de publication et mention de la délivrance du brevet: **12.05.2021**
(21) Numéro de dépôt: 15801911.7
(22) Date de dépôt: 06.11.2015
(51) Int. Cl.: F17C 5/06, F17C 6/00, F17C 9/02, F17C 9/04, B01D 1/16

(54) **DISPOSITIF ET PROCEDE DE REFROIDISSEMENT D'UN GAZ LIQUEFIE**
VORRICHTUNG UND VERFAHREN ZUM KÜHLEN EINES FLÜSSIGGASES
DEVICE AND METHOD FOR COOLING A LIQUEFIED GAS

(30) Priorité: 10.11.2014 FR 1460857; 18.05.2015 FR 1554430
(43) Date de publication de la demande: 20.09.2017
(73) Titulaire: GAZTRANSPORT ET TECHNIGAZ, 78470 Saint-Rémy-lès-Chevreuse (FR)
(72) Inventeur: DELETRE, Bruno, 78000 Versailles (FR)
(74) Mandataire: Loyer & Abello
(86) Numéro de dépôt international: PCT/FR2015/053020
(87) Numéro de publication internationale: WO 2016/075399

(56) Documents cités:
- EP-A1- 1 353 112
- WO-A1-2007/032220
- GB-A- 1 188 826
- US-A- 1 750 434
- US-A1- 2009 166 170
- US-A1- 2013 327 421
- US-A1- 2014 174 106

## Description

### Domaine technique

L'invention se rapporte au domaine du refroidissement de corps gazeux stockés sous une forme liquéfiée, et concerne notamment le refroidissement d'un gaz combustible tel que du gaz naturel liquéfié (GNL).

### Arrière-plan technologique

Le gaz naturel liquéfié est stocké dans des cuves étanches et thermiquement isolantes à des températures cryogéniques. De telles cuves peuvent faire partie d'une installation de stockage terrestre ou être installées dans une structure flottante, tel qu'un navire méthanier par exemple.

Les barrières d'isolation thermique des cuves de stockage de gaz naturel liquéfié sont inéluctablement le siège d'un flux thermique tendant à réchauffer le contenu de la cuve. Ce réchauffement se traduit par une augmentation de l'enthalpie du contenu de la cuve et, par conséquent, par un éloignement de tout ou partie de la cargaison de ses conditions d'équilibre à pression quasi-atmosphérique. Cette augmentation d'enthalpie est donc susceptible d'entraîner une évaporation du gaz naturel liquéfié et une perte de gaz naturel stocké sous forme liquide.

Afin de limiter l'augmentation d'enthalpie du gaz naturel liquéfié, l'isolation thermique des cuves est régulièrement améliorée. Toutefois, bien que les capacités d'isolation thermique des cuves tendent à augmenter, le taux de réchauffement du gaz naturel liquéfié demeure substantiel.

Par ailleurs, afin de limiter l'évaporation du gaz naturel liquéfié, il est également connu de stocker le gaz naturel liquéfié dans des cuves sous pression de manière à se déplacer sur la courbe d'équilibre liquide vapeur du gaz liquéfié considéré, augmentant ainsi sa température de vaporisation. Le gaz naturel liquéfié peut ainsi être stocké à des températures plus importantes ce qui a pour effet de limiter l'évaporation du gaz naturel. Toutefois, un tel stockage sous pression nécessite une résistance mécanique qui n'est pas offerte par tous les types de cuve et notamment par les cuves à géométrie prismatique équipant majoritairement les navires de transport de gaz naturel liquéfié.

Il est certes connu dans l'état de la technique d'utiliser le gaz issu de l'évaporation naturelle pour alimenter un équipement utilisant du gaz naturel comme combustible. Ainsi, sur un navire méthanier par exemple, le gaz évaporé est utilisé pour l'alimentation du groupe motopropulseur permettant de propulser le navire ou des groupes électrogènes fournissant l'électricité nécessaire au fonctionnement des équipements du bord. Toutefois, si un tel procédé permet de valoriser le gaz évaporé dans la cuve, il ne permet pas de diminuer sensiblement l'évaporation naturelle . Les documents EP 1 353 112 et GB 1 188 826 divulguent des dispositifs et procédés de transfert et vaporisation selon l'art antérieur.

### Résumé

Une idée à la base de l'invention est de proposer un dispositif de refroidissement d'un gaz liquéfié permettant de limiter l'évaporation naturelle du gaz liquéfié tout en le conservant dans un état thermodynamique permettant son stockage de manière durable.

Selon un mode de réalisation, l'invention fournit un dispositif de vaporisation pour le refroidissement d'un gaz liquéfié; ledit dispositif de vaporisation étant tel que défini par la revendication 3.

Ainsi, un tel dispositif permet de tirer pleinement profit de la vaporisation du gaz destiné à alimenter un équipement consommateur de gaz en phase vapeur pour refroidir le gaz liquéfié stocké dans la cuve en soustrayant à celui-ci la chaleur latente de vaporisation.

En outre, grâce à un tel dispositif, la vaporisation du gaz liquéfié destiné à alimenter l'équipement consommateur de gaz en phase vapeur peut être réalisée sans l'aide d'une source de chaleur extérieure, par opposition aux installations de vaporisation forcée utilisant un échange de chaleur avec de l'eau de mer, un liquide intermédiaire ou des gaz de combustion issus de la motorisation ou de brûleurs spécifiques. Le gaz liquéfié présent dans l'espace intérieur du récipient joue alors le rôle de source chaude pour la fraction destinée à l'équipement consommateur de gaz en phase vapeur. Toutefois, dans certains modes de réalisation, une telle source de chaleur extérieure peut aussi être prévue de manière complémentaire.

De plus, en maintenant le flux de gaz circulant dans l'enceinte de vaporisation à une pression absolue inférieure à la pression atmosphérique, le gaz liquéfié, stocké dans la cuve, peut être refroidi à une température inférieure à sa température d'équilibre de vaporisation à pression atmosphérique. Dès lors, le gaz liquéfié peut être maintenu dans un état thermodynamique sous-refroidi permettant son stockage ou son transfert dans une cuve à pression atmosphérique ou quasi-atmosphérique tout en maintenant un taux d'évaporation du gaz liquéfié faible, voire nul.

Un tel dispositif présente en outre l'avantage de limiter les variations de composition du gaz liquéfié stocké dans la cuve et du gaz en phase vapeur conduit vers un circuit d'utilisation. En effet, lorsque le gaz liquéfié est un mélange gazeux constitué d'une pluralité de composants, la phase vapeur issue de l'évaporation naturelle présente naturellement une composition plus riche en composants les plus volatils que la phase liquide, notamment l'azote. De plus, la composition de la phase vapeur a tendance à varier au cours du temps. Ainsi, il résulte de ces variations de composition que le pouvoir calorifique du gaz issu de l'évaporation naturelle comme celui du gaz liquéfié restant dans la cuve est variable au cours du temps lorsque l'évaporation naturelle prévaut. Or, l'alimentation d'un équipement avec un gaz combustible dont la capacité calorifique subit d'importantes variations de pouvoir calorifique est susceptible d'entraîner une combustion imparfaite du gaz, des défauts de fonctionnement de l'équipement et un rendement variable de l'équipement. Dès lors, en extrayant sous forme liquéfiée le gaz destiné à alimenter un équipement consommateur de gaz, les variations de composition du gaz sont limitées.

Selon d'autres modes de réalisation avantageux, un tel dispositif peut présenter une ou plusieurs des caractéristiques suivantes :
- la pompe à dépression est apte à placer le flux de gaz circulant dans l'enceinte de vaporisation sous une pression absolue comprise entre 120 et 950 mbars, de préférence entre 500 et 950 mbars.
- le circuit d'entrée comporte un régulateur de pression en amont de l'organe de perte de charge.
- le circuit d'entrée comporte, en amont de l'organe de perte de charge, une pompe additionnelle apte à aspirer le flux de gaz liquéfié en phase liquide et à générer une pression de refoulement supérieure à la pression hydrostatique maximale susceptible d'être atteinte dans l'espace intérieur du récipient au niveau de l'admission du circuit d'entrée.
- le circuit d'entrée comporte en outre un régulateur de pression agencé en aval de la pompe additionnelle apte à limiter la pression du gaz liquéfié refoulé par la pompe additionnelle dans la conduite d'entrée à une pression seuil inférieure à la pression de refoulement de la pompe additionnelle.
- selon un mode de réalisation, le circuit d'entrée comporte une pluralité d'organes de perte de charge formés de buses de pulvérisation aptes à pulvériser le gaz liquéfié à l'intérieur de l'enceinte de vaporisation. De manière avantageuse, les buses de pulvérisation pulvérisent de manière fine et homogène le gaz liquéfié contre la paroi intérieure de l'enceinte de vaporisation.
- le circuit d'entrée peut comporter un ou plusieurs organes de perte de charge.
- selon un mode de réalisation, le ou chaque organe de perte de charge est choisi parmi une variation de la section d'écoulement du circuit d'entrée, tel qu'un orifice ménagé dans une paroi transversale disposée entre la conduite d'entrée et l'enceinte de vaporisation, et présentant un diamètre inférieur à celui de la conduite d'entrée, un matériau poreux, ou une machine de détente isentropique.
- les parois d'échange de chaleur comportent des ailettes, destinées à augmenter la surface d'échange de l'enceinte de vaporisation.
- le dispositif comprend un dispositif de récupération et d'évacuation d'une fraction lourde du gaz liquéfié prélevé, associé à l'enceinte de vaporisation.
- l'enceinte de vaporisation présente une pente et le dispositif de récupération et d'évacuation d'une fraction lourde du gaz liquéfié comporte un réceptacle relié à un point bas de l'enceinte de vaporisation de manière à recueillir la fraction lourde par gravité.
- le réceptacle est raccordé à l'enceinte de vaporisation par une vanne, un clapet anti-retour, une conduite ou un siphon.
- le dispositif de récupération et d'évacuation d'une fraction lourde du gaz liquéfié comporte en outre un conduit d'évacuation relié au réceptacle.
- le conduit d'évacuation est équipé d'une pompe pour refouler la fraction lourde en phase liquide à travers le conduit d'évacuation.
- le dispositif de récupération et d'évacuation d'une fraction lourde du gaz liquéfié comporte en outre un dispositif de chauffage apte à chauffer un espace intérieur du réceptacle pour vaporiser la fraction lourde ; le conduit d'évacuation étant apte à évacuer la fraction lourde en phase vapeur.
- le conduit d'évacuation est relié au réceptacle par l'intermédiaire d'une vanne ou d'un clapet anti-retour.
- l'espace intérieur du réceptacle est en communication avec le circuit de sortie du dispositif et le circuit de sortie est raccordé à un dispositif d'alimentation en fluide via un raccord en Y afin de pouvoir refouler du fluide au travers du circuit de sortie vers le réceptacle de manière à refouler la fraction lourde contenue dans le réceptacle vers le conduit d'évacuation.
- le conduit d'évacuation est relié au circuit d'utilisation de gaz en phase vapeur.
- le conduit d'évacuation s'étend depuis le réceptacle vers le récipient ou vers un dispositif de conditionnement de la fraction lourde.
- selon un mode de réalisation, le dispositif comprend en outre un échangeur de chaleur additionnel qui est raccordé en amont à l'enceinte de vaporisation et en aval au circuit de sortie, ledit échangeur additionnel étant agencé dans une portion supérieure de l'espace intérieur du récipient destiné à être rempli de gaz liquéfié. Un tel échangeur de chaleur additionnel est particulièrement avantageux en ce qu'il permet une re-condensation de la phase gazeuse issue de l'évaporation naturelle à l'intérieur du récipient et permet ainsi de limiter les surpressions à l'intérieur dudit récipient.
- l'échangeur de chaleur additionnel est disposé, au moins partiellement au-dessus d'une limite maximale de remplissage du récipient, de manière à permettre un échange de chaleur entre le flux de gaz prélevé et une phase gazeuse du gaz liquéfié stocké dans le récipient. En d'autres termes, l'échangeur de chaleur additionnel est au moins partiellement en contact avec la phase gazeuse du gaz liquéfié stocké dans le récipient.
- selon un mode de réalisation, le dispositif comprend en outre une première canalisation de dérivation, un premier raccordement à trois voies raccordant l'enceinte de vaporisation à l'échangeur de chaleur additionnel et à la canalisation de dérivation et une vanne apte à sélectivement autoriser ou interdire le passage du flux de gaz prélevé de l'enceinte de vaporisation vers la première canalisation de dérivation. Selon un mode de réalisation, la vanne est une vanne trois voies apte à raccorder sélectivement l'enceinte de vaporisation à l'échangeur de chaleur additionnel ou à la première canalisation de dérivation. En d'autres termes, la vanne trois voies est apte à prendre sélectivement une première position dans laquelle le flux de gaz prélevé est conduit de l'enceinte de vaporisation vers l'échangeur de chaleur additionnel et une seconde position dans laquelle le flux de gaz prélevé est conduit de l'enceinte de vaporisation vers la première conduite de dérivation afin de court-circuiter l'échangeur de chaleur additionnel. Selon un autre mode de réalisation, la vanne est une vanne deux voies équipant la première canalisation de dérivation.
- selon un mode de réalisation, le dispositif comporte un second raccordement à trois voies apte à raccorder l'échangeur de chaleur additionnel au circuit de sortie et la canalisation de dérivation au circuit de sortie. Selon une variante, le second raccordement à trois voies est un raccordement commutable apte à raccorder sélectivement l'échangeur de chaleur additionnel ou la première canalisation de dérivation au circuit de sortie. Selon un autre mode de réalisation, le second raccordement à trois voies ne présente pas de possibilité de commutation de sorte que ses trois voies sont raccordées en permanence.
- selon un mode de réalisation, l'enceinte de vaporisation et l'échangeur de chaleur additionnel sont agencés en continue l'un à la suite de l'autre, c'est-à-dire sans interruption. En d'autres termes, les surfaces d'échange de l'échangeur additionnel s'étendent dans le prolongement des surfaces d'échange de l'enceinte de vaporisation.
- le dispositif comprend en outre une seconde canalisation de dérivation qui est, d'une part, raccordée au circuit d'entrée, en amont de l'organe de perte de charge, et, d'autre part, raccordée à l'échangeur de chaleur additionnel afin de conduire au moins une partie du flux de gaz liquéfié prélevé du circuit d'entrée vers la canalisation de dérivation, le dispositif comprenant en outre des moyens de régulation aptes à réguler les débits de flux de gaz circulant respectivement au travers de l'enceinte de vaporisation et au travers de ladite seconde canalisation de dérivation. Au moins une partie du flux de gaz liquéfié prélevé passe ainsi au travers de la seconde canalisation de dérivation sans passer par l'enceinte de vaporisation, la vaporisation de ladite partie du flux de gaz prélevé se faisant alors dans l'échangeur de chaleur additionnel. Les moyens de régulation sont aptes à réguler les débits de flux de gaz circulant respectivement au travers de l'enceinte de vaporisation et au travers de ladite seconde canalisation de dérivation en fonction d'une variable représentative de la pression de la phase gazeuse dans l'espace intérieur du récipient.

Selon un mode de réalisation, l'invention fournit également une installation de stockage et de refroidissement d'un gaz liquéfié comportant un récipient présentant un espace intérieur et un dispositif de vaporisation précité, l'enceinte de vaporisation dudit dispositif de vaporisation étant agencée dans l'espace intérieur dudit récipient.

Selon d'autres modes de réalisation avantageux, une telle installation peut présenter une ou plusieurs des caractéristiques suivantes :
- le récipient est une cuve étanche et thermiquement isolante.
- le récipient est une cuve annexe étanche et thermiquement isolante, l'installation comportant en outre une cuve principale étanche et thermiquement isolante, un conduit d'amenée et un conduit de retour reliant la cuve principale et la cuve annexe et une pompe apte à faire circuler du gaz liquéfié entre la cuve principale et la cuve annexe au travers du conduit d'amenée et du conduit de retour.
- le récipient est rempli d'un gaz combustible liquéfié choisi parmi le gaz naturel liquéfié, l'éthane et le gaz de pétrole liquéfié.
- dans un mode de réalisation, la cuve étanche et thermiquement isolante est une cuve à membranes. Dans d'autres modes de réalisation, la cuve est une cuve autoporteuse de type B ou C.

Selon un mode de réalisation, l'invention fournit également un procédé de refroidissement d'un gaz liquéfié contenu dans l'espace intérieur d'un récipient, le procédé de refroidissement étant tel que défini par la revendication 1.

Selon un mode de réalisation, on maintient une pression absolue comprise entre 120 et 950 mbars, de préférence comprise entre 650 et 850 mbars, à l'intérieur de l'enceinte de vaporisation.

Selon un mode de réalisation, le gaz liquéfié est stocké dans l'espace intérieur du récipient dans un état d'équilibre diphasique et présente une phase liquide inférieure et une phase gazeuse supérieure et l'on conduit le flux de gaz prélevé de l'enceinte de vaporisation vers un échangeur additionnel en contact au moins partiellement, voire intégralement, avec la phase gazeuse supérieure afin d'effectuer un échange de chaleur entre le flux de gaz prélevé et la phase gazeuse supérieure avant de conduire le flux de gaz prélevé vers le circuit d'utilisation de gaz en phase vapeur.

De manière avantageuse, l'enceinte de vaporisation est raccordée à l'échangeur de chaleur additionnel et à une canalisation de dérivation permettant de contourner l'échangeur de chaleur additionnel par un premier raccordement à trois voies, une vanne étant apte à sélectivement autoriser ou interdire le passage du flux de gaz prélevé vers la canalisation de dérivation et l'on commande ladite vanne afin d'autoriser ou interdire le passage du flux de gaz prélevé vers la canalisation de dérivation en fonction d'une variable représentative de la pression de la phase gazeuse supérieure.

Selon un mode de réalisation, la vanne est une vanne trois voies commutable et l'on commute ladite vanne trois voies afin de conduire le flux de gaz prélevé de l'enceinte de vaporisation vers l'échangeur de chaleur additionnel ou vers la canalisation de dérivation en fonction de la variable représentative de la pression de la phase gazeuse supérieure.

Selon une variante de réalisation, l'on mesure la pression de la phase gazeuse à l'intérieur du récipient et l'on commande la vanne en fonction d'un seuil de pression et de de la pression de la phase gazeuse mesurée. Plus particulièrement, l'on conduit le flux de gaz prélevé de l'enceinte de vaporisation vers l'échangeur de chaleur additionnel lorsque la pression de la phase gazeuse mesurée est supérieure audit seuil de pression. De même, l'on conduit le flux de gaz prélevé de l'enceinte de vaporisation vers la canalisation de dérivation afin de court-circuiter l'échangeur de chaleur additionnel lorsque la pression de la phase gazeuse mesurée est inférieure à un seuil de pression.

Selon un mode de réalisation, l'on prélève un flux de gaz liquéfié dans le récipient et on le conduit vers un échangeur de chaleur additionnel au moins partiellement en contact avec la phase gazeuse supérieure afin d'effectuer un échange de chaleur entre ledit flux de gaz prélevé et la phase gazeuse supérieure. Ce mode de fonctionnement permet d'augmenter l'échange thermique mis en œuvre au niveau de l'échangeur de chaleur additionnel et est par conséquent mis en œuvre lorsque la pression de la phase gazeuse dépasse un seuil.

Selon un mode de réalisation, l'invention concerne un navire comportant une installation précitée pour le stockage et le refroidissement d'un gaz liquéfié.

Selon un mode de réalisation, le circuit d'utilisation du gaz en phase vapeur est un équipement de production d'énergie, tel qu'un équipement pour la propulsion du navire.

Selon un mode de réalisation, l'invention fournit aussi un procédé de chargement ou déchargement d'un tel navire, dans lequel on achemine un fluide à travers des canalisations isolées depuis ou vers une installation de stockage flottante ou terrestre vers ou depuis la cuve du navire.

Certains aspects de l'invention partent de l'observation que le stockage du gaz naturel liquéfié sous pression entraîne en réalité un déplacement du point d'équilibre diphasique du gaz sur la courbe d'équilibre liquide-vapeur. Ainsi, dès lors que le gaz naturel liquéfié, qui était ainsi stocké sous pression, est transféré vers une installation dans laquelle le gaz naturel liquéfié est stocké à une pression moindre, telle que la pression atmosphérique, le transfert s'accompagne d'une forte vaporisation du gaz naturel liquéfié, à moins que le gaz naturel ait fait l'objet d'un traitement de refroidissement préalable qui est complexe et coûteux.

### Brève description des figures

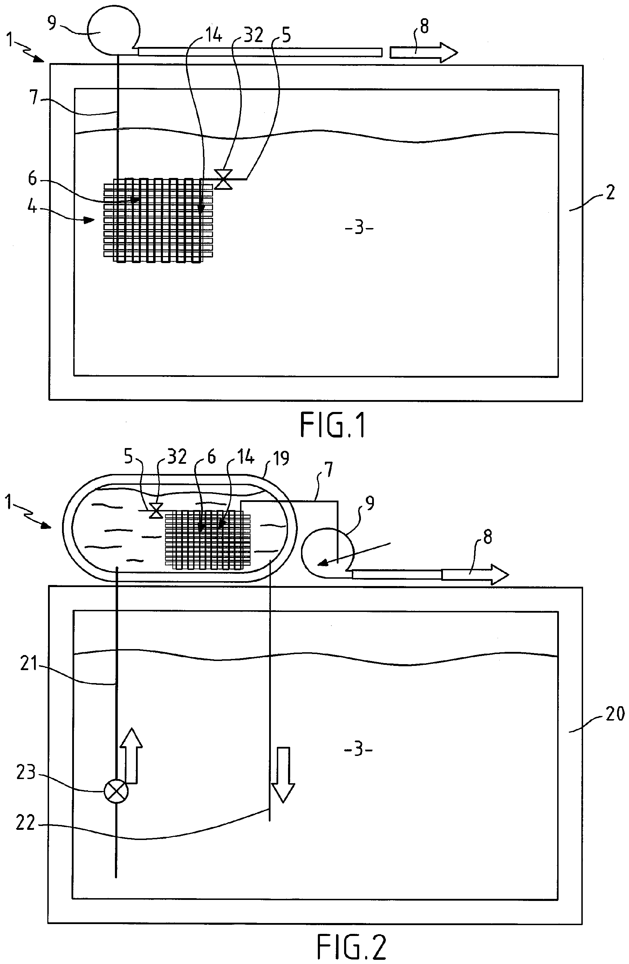

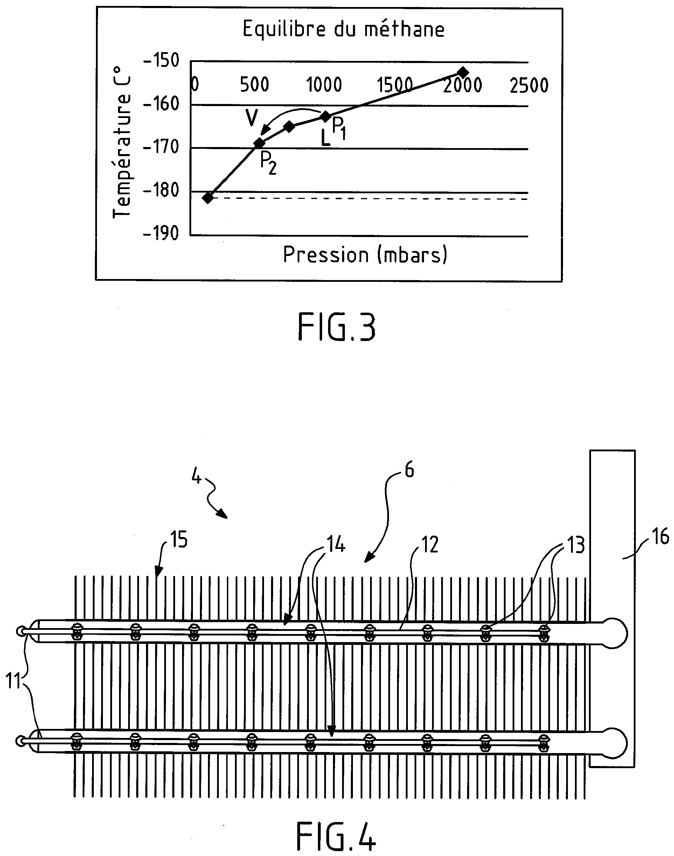

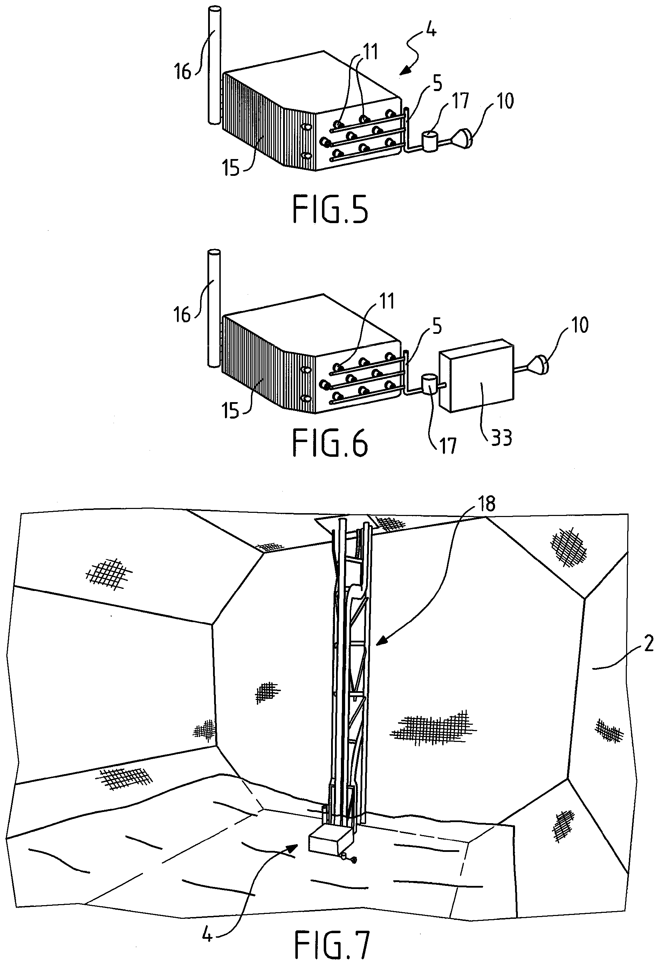

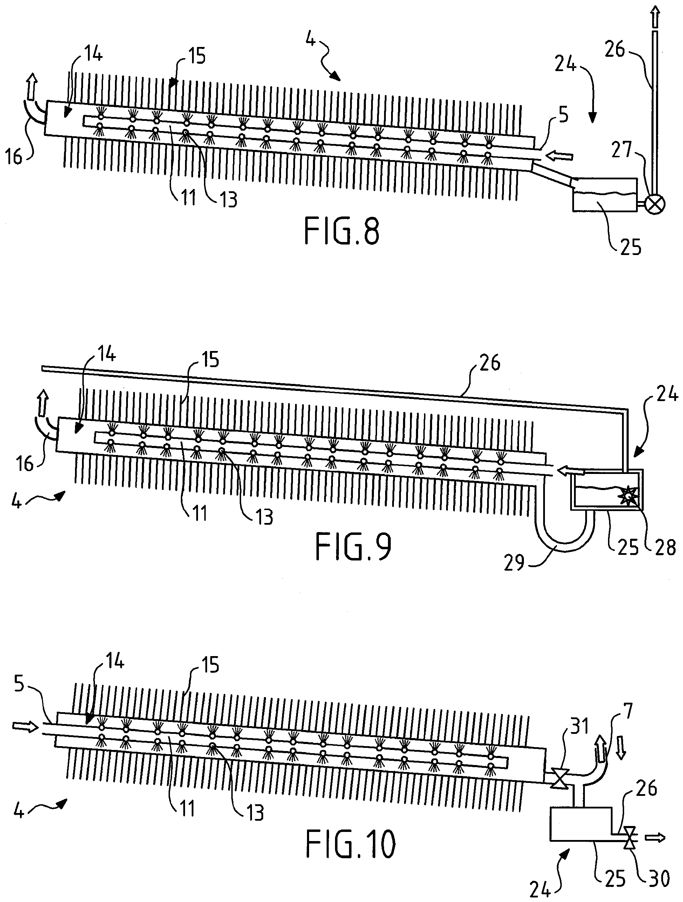

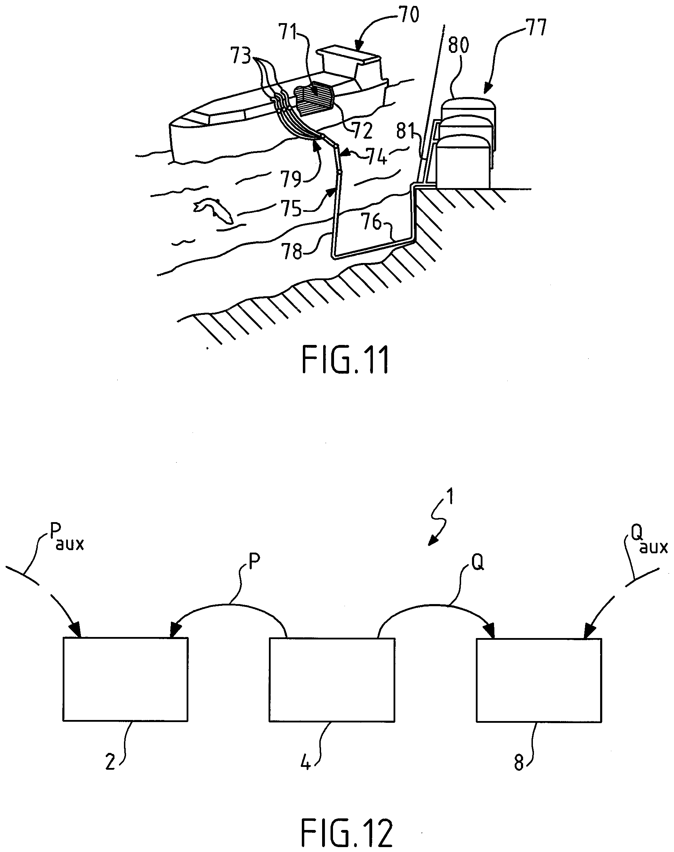

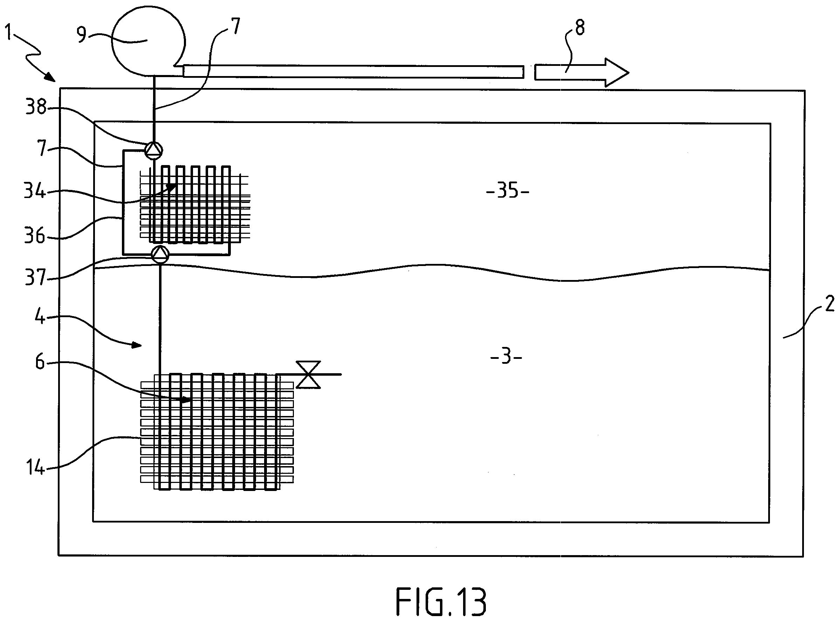

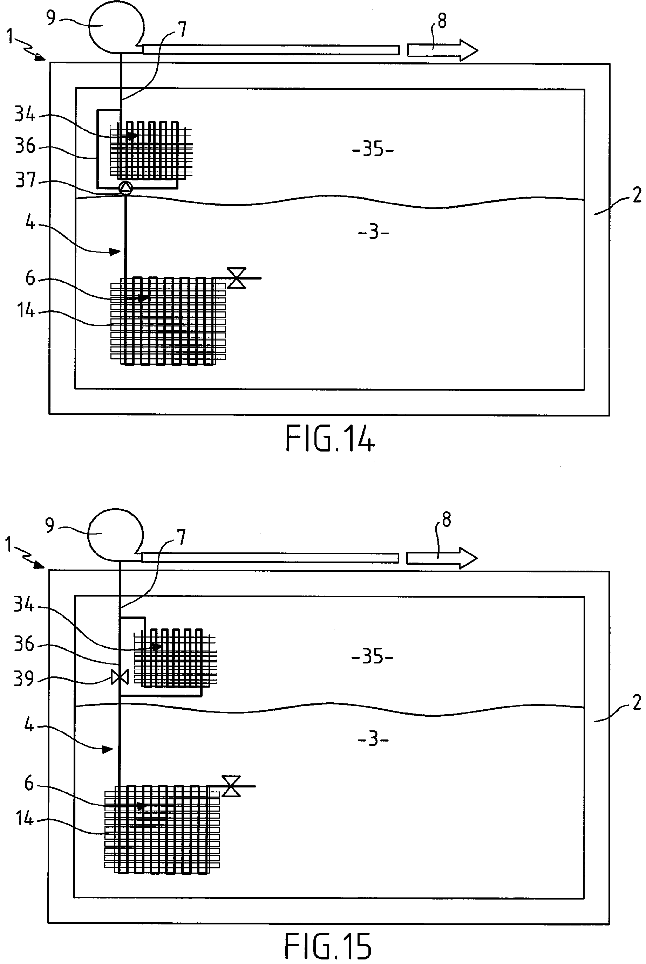

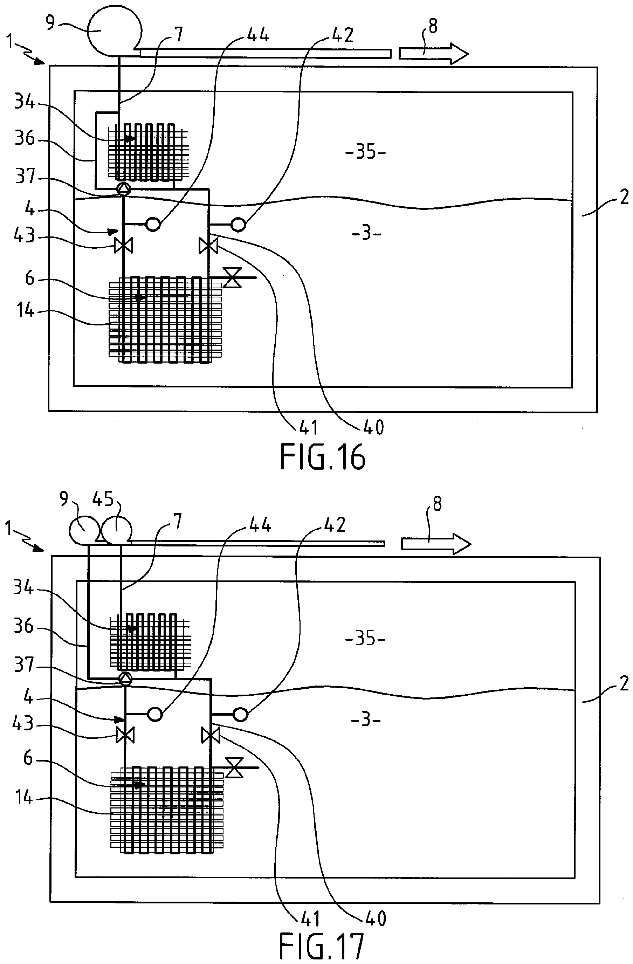

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** illustre schématiquement une installation de stockage et de refroidissement d'un gaz liquéfié selon un premier mode de réalisation.
- **La** **figure 2** illustre schématiquement une installation de stockage et de refroidissement d'un gaz liquéfié selon un second mode de réalisation.
- **La** **figure 3** est un diagramme d'équilibre liquide-vapeur du méthane.
- **La** **figure 4** illustre schématiquement un dispositif de vaporisation selon un mode de réalisation.
- **La** **figure 5** est une vue en perspective du dispositif de vaporisation de la figure 4, partiellement coupée.
- **La** **figure** 6 est une vue en perspective d'un dispositif de vaporisation selon un autre mode de réalisation.
- **La** **figure 7** est une vue en perspective d'une cuve à membrane et d'un dispositif de vaporisation immergé dans la cuve.
- **La** **figure 8** illustre schématiquement un dispositif de vaporisation équipé d'un dispositif de récupération et d'évacuation de la fraction lourde du gaz liquéfié selon un premier mode de réalisation.
- **La** **figure 9** illustre schématiquement un dispositif de vaporisation équipé d'un dispositif de récupération et d'évacuation de la fraction lourde du gaz liquéfié selon un second mode de réalisation.
- **La** **figure 10** illustre schématiquement un dispositif de vaporisation équipé d'un dispositif de récupération et d'évacuation de la fraction lourde du gaz liquéfié selon un troisième mode de réalisation.
- **La** **figure 11** est une représentation schématique écorchée d'un navire méthanier et d'un terminal de chargement/déchargement de cette cuve.
- **La** **figure 12** est une autre représentation schématique de l'installation de stockage et de refroidissement d'un gaz liquéfié.
- **La** **figure 13** illustre une installation de stockage et de refroidissement d'un gaz liquéfié selon un troisième mode de réalisation.
- **La** **figure 14** illustre une installation de stockage et de refroidissement d'un gaz liquéfié selon un quatrième mode de réalisation.
- **La** **figure 15** illustre une installation de stockage et de refroidissement d'un gaz liquéfié selon un cinquième mode de réalisation.
- **La** **figure 16** illustre une installation de stockage et de refroidissement d'un gaz liquéfié selon un sixième mode de réalisation.
- **La** **figure 17** illustre une installation de stockage et de refroidissement d'un gaz liquéfié selon un septième mode de réalisation.

### Description détaillée de modes de réalisation

Dans la description et les revendications, le terme « gaz » présente un caractère générique et vise indifféremment un gaz constitué d'un seul corps pur ou un mélange gazeux constitué d'une pluralité de composants. Un gaz liquéfié désigne ainsi un corps chimique ou un mélange de corps chimiques qui a été placé dans une phase liquide à basse température et qui se présenterait dans une phase vapeur dans les conditions normales de température et de pression.

Sur la figure 1, une installation 1 de stockage et de refroidissement d'un gaz liquéfié selon un premier mode de réalisation est représentée. Une telle installation 1 peut être installée à terre ou sur un ouvrage flottant. Dans le cas d'un ouvrage à terre, l'installation peut être destinée à un stockage de gaz naturel liquéfié présentant des organes consommateurs de gaz sous forme de vapeur. Ces organes consommateurs peuvent être des groupes électrogènes, des générateurs de vapeur, des bruleurs ou tout autre organe consommant du gaz sous forme de vapeur qu'il soit mitoyen du stockage ou sur le réseau de distribution de gaz vapeur alimenté par ledit stockage.

Dans le cas d'un ouvrage flottant, l'installation peut être destinée à un navire de transport de gaz naturel liquéfié, tel qu'un méthanier, mais peut également être destinée à tout navire dont le groupe motopropulseur, les groupes électrogènes, les générateurs de vapeurs ou tout autre organe consommateur sont alimentés en gaz. A titre d'exemple, il peut ainsi s'agir d'un navire de transport de marchandises, d'un navire de transport de passagers, d'un navire de pêche, d'une unité flottante de production d'électricité ou autres.

L'installation 1 comporte un récipient présentant un espace intérieur à l'intérieur duquel est stocké du gaz liquéfié 3. Le récipient est ici une cuve 2 étanche et thermiquement isolante.

Selon un mode de réalisation, la cuve 2 est une cuve à membranes permettant de stocker le gaz liquéfié, à pression atmosphérique ou quasi-atmosphérique, la pression à l'intérieur d'une telle cuve étant susceptible de varier d'au maximum 300 mbar par rapport à la pression atmosphérique.

Une telle cuve à membrane peut notamment comporter une structure multicouche comportant, depuis l'extérieur vers l'intérieur de la cuve 2, une barrière thermiquement isolante secondaire comportant des éléments isolants reposant contre une structure porteuse, une membrane d'étanchéité secondaire, une barrière thermiquement isolante primaire comportant des éléments isolants reposant contre la membrane d'étanchéité secondaire et une membrane d'étanchéité primaire destinée à être en contact avec le gaz liquéfié contenu dans la cuve. A titre d'exemple, de telles cuves à membranes sont notamment décrites dans les demandes de brevet WO14057221, FR2691520 et FR2877638.

Selon un autre mode de réalisation alternatif, la cuve 1 est une cuve de type B ou C. Un telle cuve est autoporteuse et peut notamment présenter une forme parallélépipédique, prismatique, sphérique, cylindrique ou multi-lobique. Les cuves de type C présentent la particularité de permettre un stockage du gaz naturel liquéfié à des pressions sensiblement supérieures à la pression atmosphérique.

Le gaz liquéfié 3 est un gaz combustible. Le gaz liquéfié 3 peut notamment être un gaz naturel liquéfié (GNL), c'est-à-dire un mélange gazeux comportant majoritairement du méthane ainsi qu'un ou plusieurs autres hydrocarbures, tels que l'éthane, le propane, le n-butane, le i-butane, le n-pentane le i-pentane, le néopentane, et de l'azote en faible proportion. Le gaz naturel liquéfie est stocké à pression atmosphérique à une température d'environ -162°C.

Le gaz combustible peut également être de l'éthane ou un gaz de pétrole liquéfié (GPL), c'est-à-dire un mélange d'hydrocarbures issu du raffinage du pétrole comportant essentiellement du propane et du butane.

L'installation 1 comporte un dispositif de vaporisation 4 destiné à prélever un flux de gaz en phase liquide du récipient et à le détendre afin de le vaporiser en utilisant la chaleur latente de vaporisation du gaz pour refroidir le gaz liquéfié 3 resté dans le récipient.

Le principe de fonctionnement d'un tel dispositif de vaporisation 4 est rappelé en relation avec la figure 3 qui représente un diagramme d'équilibre liquide-vapeur du méthane. Ce diagramme représente le domaine, noté L, dans lequel le méthane se présente en phase liquide et le domaine, noté V, dans lequel le méthane se présente en phase vapeur, en fonction de la pression représentée en abscisse et de la température en ordonnée.

Le point P1 représente un état d'équilibre diphasique correspondant à l'état du méthane stocké dans une cuve 2 à la pression atmosphérique et à une température d'environ -162°C. Lorsque du méthane dans un tel état d'équilibre est prélevé de la cuve 2 puis détendu dans le dispositif de vaporisation 4, par exemple à une pression absolue d'environ 500 mbars, l'équilibre du méthane détendu se déplace vers la gauche jusqu'au point P2. Le méthane ainsi détendu subit donc une diminution de température d'environ 7 °C. Dès lors, le méthane prélevé étant mis en contact thermique via le dispositif de vaporisation 4 avec le méthane resté dans la cuve 2, il se vaporise au moins partiellement et, en se vaporisant, soustrait au méthane liquide stocké dans la cuve 2 les calories nécessaires à sa vaporisation ce qui permet de refroidir le méthane liquide restant dans la cuve 2.

En revenant à la figure 1, l'on observe que le dispositif de vaporisation 4 comporte :
- un circuit d'entrée 5 comportant une admission immergée dans le gaz liquéfié 3 stocké dans le cuve 2 ;
- une ou plusieurs enceintes de vaporisation 14 immergées dans le gaz liquéfié 3 stocké dans le cuve 2 et comportant des parois d'échange de chaleur 6, immergées dans le gaz liquéfié 3 stocké dans le cuve 2, de manière à mettre en contact thermique le flux de gaz prélevé avec le gaz liquéfié 3 restant dans la cuve 2 ; et
- un circuit de sortie 7 pour évacuer le flux de gaz en phase vapeur vers un circuit d'utilisation de gaz en phase vapeur 8.

Le circuit d'entrée 5 est équipé d'un ou plusieurs organes de perte de charge, non illustrés sur la figure 1, permettant de créer une perte de charge et débouchant à l'intérieur de l'enceinte de vaporisation 14 de manière à détendre le flux de gaz liquéfié prélevé.

Le dispositif de vaporisation 4 est également équipé d'une pompe à dépression 9, disposée hors de la cuve et associée au circuit de sortie 7. La pompe à dépression 9 permet d'aspirer un flux de gaz liquéfié stocké dans la cuve 2 vers l'enceinte de vaporisation 14 et de le refouler en phase vapeur vers un circuit d'utilisation de gaz en phase vapeur 8.

La pompe à dépression 9 est en outre dimensionnée de manière à maintenir l'enceinte de vaporisation 14 sous une pression absolue inférieure à la pression atmosphérique.

Pour le gaz naturel liquéfié, la pression absolue de travail régnant à l'intérieur de l'enceinte de vaporisation 14 est comprise entre 120 et 950 mbars, avantageusement entre 500 et 950 mbars, plus particulièrement entre 650 et 850 mbars, et de préférence de l'ordre de 750 mbars.

Il est en effet indispensable que la pression de travail à l'intérieur de l'enceinte de vaporisation 14 soit supérieure à la pression correspondant au point triple du diagramme de phase du méthane de sorte à éviter une solidification du gaz naturel à l'intérieur de l'enceinte de vaporisation 14. Par ailleurs, une augmentation de la pression de travail a pour effet de diminuer la différence de température entre la température du gaz à l'intérieur de l'enceinte de vaporisation 14 et la température du gaz liquéfié restant dans la cuve 2. Dans ce cas, la surface d'échange de l'enceinte de vaporisation 14 nécessaire pour obtenir une même puissance frigorifique doit être augmentée. A contrario, une diminution de la pression de travail a pour effet d'augmenter la différence de température précitée et a ainsi pour conséquence de diminuer la surface d'échange nécessaire pour obtenir une même puissance frigorifique. Toutefois, la diminution de la pression de travail a pour inconvénient de diminuer l'efficacité de l'échange thermique. Dès lors, les plages de pression de travail précitées permettent d'offrir un bon compromis entre la compacité du dispositif de vaporisation 4 et ses performances.

La pompe à dépression 9 peut être dimensionnée en fonction de la demande en gaz en phase vapeur du circuit d'utilisation de gaz en phase vapeur 8. Dans un mode de réalisation, la pompe à dépression 9 est apte à transférer un débit de vapeur suffisant pour assurer toute l'alimentation en gaz en phase vapeur nécessaire à l'alimentation du circuit d'utilisation de gaz en phase vapeur 8. La pompe à dépression 9 doit donc présenter une caractéristique débit/pression adaptée au besoin du circuit d'utilisation de gaz en phase vapeur 8. A titre d'exemple, le ventilateur centrifuge commercialisé par la société VentMeca® sous la référence Ventmeca 126 pourra s'avérer approprié pour certaines applications. Un tel ventilateur centrifuge permet d'assurer un débit de 3.3 m³/s en générant une dépression de 250 mbars.

La pompe à dépression 9 est une pompe cryogénique, c'est-à-dire apte à supporter des températures cryogéniques inférieures à -150 °C. Elle doit en outre être conforme à la règlementation ATEX, c'est-à-dire conçue afin d'écarter tout risque d'explosion.

Dans le mode de réalisation de la figure 1, une seule pompe à dépression 9 permet d'assurer la circulation du flux de gaz au travers de l'enceinte de vaporisation 14 afin d'assurer un refroidissement du gaz liquéfié 3 stocké dans le cuve 2 et une alimentation en gaz en phase vapeur d'un équipement de production d'énergie. Nous observons, en outre, sur la figure 1 que seul le circuit de sortie 7 passe au travers de la structure de la cuve 2, ce qui limite les pertes thermiques, réduit les risques de perte d'étanchéité et simplifie la conception de la structure avec l'ensemble des barrières étanches et isolantes.

Dans le cas d'une installation 1 embarquée sur un navire, le circuit d'utilisation du gaz en phase vapeur 8 peut notamment être relié à un équipement de production d'énergie du groupe motopropulseur, non représenté, permettant de propulser le navire. Un tel équipement de production d'énergie est notamment choisi parmi les moteurs thermiques, les piles à combustion et les turbines à gaz. Lorsque l'équipement de production d'énergie est un moteur thermique, le moteur peut être à alimentation mixte diesel-gaz naturel. De tels moteurs peuvent fonctionner, soit en mode diesel dans lequel le moteur est intégralement alimenté en diesel soit en mode gaz naturel dans lequel le combustible du moteur est principalement constitué de gaz naturel alors qu'une faible quantité de diesel pilote est injectée pour initier la combustion.

Par ailleurs, selon un mode de réalisation, le circuit d'utilisation du gaz évaporé 8 comporte en outre un échangeur de chaleur supplémentaire, non illustré, permettant de chauffer davantage le flux de gaz en phase vapeur jusqu'à des températures compatibles avec le fonctionnement de l'équipement consommateur de gaz. L'échangeur de chaleur supplémentaire peut notamment assurer un contact thermique entre le flux de gaz en phase vapeur et de l'eau de mer ou des gaz de combustion générés par un équipement de production d'énergie.

Selon un mode de réalisation, le circuit d'utilisation du gaz en phase vapeur 8 peut également comporter un compresseur permettant de chauffer le flux de gaz en phase vapeur et de le comprimer à des pressions compatibles avec les spécifications des équipements de production d'énergie alimentés en gaz combustible, par exemple de l'ordre de 5 à 6 bars absolus pour certains équipements de production d'énergie.

Le circuit d'entrée 5 est équipé d'une vanne 32 permettant de couper l'alimentation en gaz liquéfié à l'entrée du dispositif de vaporisation 4.

La structure d'un dispositif de vaporisation 4 selon un mode de réalisation est illustrée sur les figures 4 et 5.

Le dispositif de vaporisation 4 comporte, à l'extrémité amont du circuit d'entrée 5, un filtre 10, représenté sur la figure 5, permettant d'éviter que des impuretés contenues dans la cuve 2 ne s'introduisent à l'intérieur du circuit d'entrée 5 du dispositif de vaporisation 4.

Par ailleurs, le circuit d'entrée 5 comporte plusieurs rampes d'aspersion 11. Comme illustré sur la figure 4, chaque rampe d'aspersion 11 comporte un tube 12 qui est équipée d'une pluralité de buses de pulvérisation 13, également désignées par les termes sprayers et/ou atomiseurs, présentant chacune un ou plusieurs orifices permettant de pulvériser le gaz en phase liquide sous forme de fines gouttelettes. Chaque rampe d'aspersion 11 s'étend à l'intérieur d'une enceinte de vaporisation 14, de forme tubulaire. Compte-tenu de la variation de section d'écoulement engendrée par chaque buse de pulvérisation 13, des pertes de charge permettant de détendre le flux de gaz extrait sont générées. De plus, la fragmentation en fines gouttelettes favorise la vaporisation en augmentant la surface d'échange de la phase liquide.

Notons que dans d'autres modes de réalisation non représentés, les pertes de charges permettant de détendre le flux de gaz extrait ne sont pas générées par des buses de pulvérisation mais :
- par une simple variation de la section d'écoulement, tel qu'un ou plusieurs orifices par exemple sous la forme de capillaires ou aiguilles de détente avec un pilotage électronique ou thermostatique, ménagés dans une paroi transversale disposée entre la conduite d'entrée et l'enceinte de vaporisation, et présentant chacun un diamètre bien inférieur à celui de la conduite d'entrée,
- par un matériau poreux, tel que de la mousse de céramiques, de la mousse métallique ou de la mousse polymère à cellules ouvertes, logé dans le circuit d'entrée en amont de l'enceinte de vaporisation 14 ; ou
- par une machine de détente isentropique, telle qu'une turbine de détente ou une roue de détente passive.

Dans le mode de réalisation représenté, les enceintes de vaporisation 14 sont équipées d'ailettes 15 associées aux parois d'échange de chaleur 6 des enceintes de vaporisation 14 et permettant d'augmenter leur surface échange avec le gaz liquéfié 3 contenu dans la cuve 2. Les ailettes 15 sont disposées à l'extérieur des enceintes de vaporisation 14 et s'étendent parallèlement les unes aux autres perpendiculairement à la direction longitudinale des enceintes de vaporisation 14. L'ensemble des enceintes de vaporisation 14 et des ailettes 15 constituent un échangeur de forme générale parallélépipédique, particulièrement compacte.

Les buses de pulvérisation 13 sont régulièrement réparties le long des enceintes de vaporisation 14 de telle sorte qu'une surface maximale des parois 6 des enceintes de vaporisation 14 puisse être atteinte par les gouttelettes de gaz liquéfié.

Du fait de leur détente à travers les buses de pulvérisation 13, les gouttelettes de gaz liquéfié se vaporisent en prenant au gaz liquide 3 stocké dans la cuve 2, via les ailettes 15 et la paroi 6 des enceintes de vaporisation 14, la chaleur latente de vaporisation du gaz liquéfié.

Par ailleurs, les enceintes de vaporisation 14 débouchent dans une tubulure 16 de collecte des vapeurs de gaz formant une portion du circuit de sortie 7 qui est raccordée au circuit d'utilisation de gaz en phase vapeur 8 via la pompe à dépression 9.

A titre d'exemple, pour transmettre une puissance frigorifique de l'ordre de 300 KW ,qui correspond au flux thermique sur quatre cuves d'un méthanier standard, avec une différence de température de l'ordre de 3°C entre la température d'évaporation du flux de gaz extrait et la température du gaz liquéfié stocké dans la cuve, les parois d'échange de chaleur 6 de(s) l'enceinte(s) de vaporisation 14 doivent présenter une surface d'échange de l'ordre de 90 m² par cuve. Pour atteindre une telle surface d'échange, un échangeur à ailettes tel que décrit ci-dessus comportant une enceinte de vaporisation 14 tubulaire de 200 mm, des ailettes de forme carrée de 1 m de côté, espacées les unes des autres de 50mm, devra présenter une longueur d'environ 4.7 m.

Bien qu'un dispositif de vaporisation équipé d'un échangeur à ailettes tel que décrit ci-dessus permette d'obtenir des performances thermiques satisfaisantes dans un encombrement limité, il pourra également être envisagé d'utiliser tout autre technologie d'échange de chaleur, tels que des échangeurs à serpentin ou à plaques ou à micro-canaux par exemple.

Dans le mode de réalisation représenté sur la figure 5, le circuit d'entrée 5 comporte également, en amont des rampes d'aspersion 11, un régulateur de pression 17 permettant de limiter la pression du gaz liquéfié, à une pression seuil, à l'entrée du dispositif de vaporisation 4. Un tel régulateur de pression 17 permet de maintenir constante la pression de gaz liquéfié à l'admission dans le circuit d'entrée 5 quelle que soit la pression hydrostatique exercée par le gaz liquéfié 3 à l'intérieur de le cuve 2 et, par conséquent, quel que soit le niveau de remplissage de la cuve 2. A titre d'exemple, le seuil de pression appliqué par le régulateur de pression 17 est de l'ordre de la pression atmosphérique.

Dans un mode de réalisation alternatif, représenté sur la figure 6, la conduite d'entrée 5 comporte, en amont des rampes d'aspersion 11, une pompe additionnelle 33 apte à générer une pression de refoulement supérieure à la pression hydrostatique exercée par le gaz liquéfié 3 à l'intérieur de la cuve 1 à la hauteur de l'admission dans le circuit d'entrée 5. Le circuit d'entrée 5 est également équipé d'un régulateur de pression 17, disposé en aval de la pompe additionnelle 33, dont la pression de seuil est cette fois-ci fixée à une valeur supérieure à la pression atmosphérique mais inférieure à la pression de refoulement de la pompe additionnelle 33. Un tel agencement permet également de maintenir la pression du flux de gaz liquéfié admis dans le dispositif de vaporisation 4 constante quelle que soit la pression hydrostatique exercée par le gaz liquéfié 3 stocké dans la cuve 2. Par ailleurs, ce mode de réalisation est également avantageux en ce que la pression motrice au niveau des buses de pulvérisation 13 est plus importante que dans le mode de réalisation précédent, ce qui permet, d'une part, de limiter le nombre de buses de pulvérisation 13 nécessaire et, d'autre part, d'assurer une plus grande stabilité du débit. A titre d'exemple, la pompe additionnelle 33 peut être commandée de manière à refouler du gaz liquéfié à une pression de l'ordre de 6 à 8 bars, alors que la pression de seuil du limiteur de pression 17 est fixée à environ 5 bars. Dans l'hypothèse où la pompe à dépression 9 génère une dépression relative de l'ordre de 0.25 bars dans l'enceinte de vaporisation 14, c'est-à-dire une pression absolue de l'ordre de 0.76 bars, la pression motrice au niveau des buses de pulvérisation 13 sera donc de l'ordre de 5.25 bars.

Selon un mode de réalisation, représenté sur la figure 7, l'(les) enceinte(s) de vaporisation 14 du dispositif de vaporisation 4, c'est-à-dire l'échangeur de chaleur, est disposée au fond de la cuve 2 de manière à assurer son immersion quel que soit le niveau de remplissage de la cuve 2. En fonction du type de cuve 2 visé, la fixation et le support de l'échangeur de chaleur du dispositif de vaporisation 4 pourront être réalisés de différentes manières.

Pour les cuves autoporteuses de type B ou C tolérant un ancrage direct sur leur surface interne, l'échangeur de chaleur peut être porté et fixé directement contre la paroi de fond de la cuve 2. Dans un tel mode de réalisation, le circuit de sortie 7 est alors équipé de moyens de compensation, tels que des soufflets ou des lyres de compensation, permettant de compenser les dilatations/contractions.

Pour les cuves 2 dont la surface interne n'est pas apte à supporter l'échangeur de chaleur du dispositif de vaporisation 4, telles que les cuves à membranes, l'échangeur de chaleur du dispositif de vaporisation 4 peut être fixé et supporté par un pied de support en appui contre la structure porteuse de la cuve 2 de manière à transférer les efforts sur la structure porteuse de la cuve 2, à travers les barrières d'isolation thermique. A titre d'exemple, une cuve 2 étanche et thermiquement isolante à membranes équipée d'un tel pied de support est divulguée dans le document WO2011/157915.

De manière alternative, l'échangeur de chaleur du dispositif de vaporisation 2 peut également être fixé à un mât ou tour de chargement/déchargement 18, illustré sur la figure 6. Un tel mât de chargement/déchargement est, suspendu au pont supérieur du navire et guidé au niveau de son extrémité inférieure de manière à limiter le moment s'exerçant au niveau de l'ancrage du mât au pont. Un tel mât de chargement/déchargement 18 est par exemple décrit dans le document FR2785034.

La figure 2 illustre une installation 1 de stockage et de refroidissement d'un gaz liquéfié selon un second mode de réalisation.

Dans ce mode de réalisation, l'installation comporte une cuve principale 20 et une cuve annexe 19 étanches et thermiquement isolantes. La cuve annexe 19 présente une capacité plus restreinte que la cuve principale 20. La cuve annexe 19 est plus particulièrement destinée au logement de l'enceinte de vaporisation 1 du dispositif de vaporisation 4 et à fournir une enceinte pour la réalisation de l'échange thermique entre le flux de gaz prélevé au travers du dispositif de vaporisation 7 et le gaz liquéfié 3 stocké dans la cuve principale 20.

Pour ce faire, la cuve annexe 19 est reliée à la cuve principale 20 par l'intermédiaire d'un conduit d'amenée 21 et d'un conduit de retour 22. L'installation 1 comporte également une pompe 23 permettant de faire circuler le gaz liquéfié entre la cuve principale 20 et le cuve annexe 19 au travers du conduit d'amenée 21 et du conduit de retour 22. Le conduit d'amenée 21 débouche à proximité du fond de la cuve principale 20 de sorte à permettre le pompage de gaz liquéfié stocké dans la cuve principale 20 même lorsque son niveau de remplissage est faible.

Un tel mode de réalisation est avantageux en ce qu'il permet une meilleure homogénéisation de la température du gaz liquéfié et limite la création d'une stratification thermique à l'intérieur de la cuve principale 20. D'autre part, la cuve annexe 19 présentant des dimensions plus faibles que la cuve principale 20, ce mode de réalisation permet également d'assurer que l'enceinte de vaporisation du dispositif de vaporisation 4 soit maintenue immergée quasiment jusqu'à ce que la cuve principale 20 soit vide. Enfin, une telle cuve annexe 19 autorise également des variantes de réalisation dans lesquelles la cuve annexe 19 serait raccordée à plusieurs cuves principales 20 de manière à permettre une mise en commun d'un dispositif de vaporisation 4.

De manière générale, l'invention n'est pas limitée aux installations dans lesquelles le dispositif de vaporisation est agencé dans l'espace intérieur d'une cuve étanche et thermiquement isolante et vise toutes les installations dans lesquels le dispositif de vaporisation prélève un flux de gaz liquéfié d'une cargaison de gaz liquéfié, d'une part, et extrait des calories de la portion restante de cette même cargaison pour vaporiser le flux prélevé, d'autre part. Ainsi, dans la description et les revendications, le terme « récipient » qui vise l'objet à l'intérieur duquel est agencé l'enceinte de vaporisation 14 du dispositif de vaporisation 4 présente un caractère générique et vise tout objet capable de contenir ou de transporter le gaz naturel liquéfié, tel qu'une cuve ou une canalisation, par exemple.

Les figures 8 à 10 illustrent schématiquement des dispositifs de vaporisation 4 équipés d'un dispositif de récupération et d'évacuation de la fraction lourde du gaz liquéfié 24 selon trois modes de réalisation distincts. Un tel dispositif de récupération et d'évacuation de la fraction lourde 24 vise plus particulièrement les installations 1 destinées au stockage d'un mélange gazeux, tel que le gaz naturel liquéfié.

La fraction lourde du gaz est constituée des composants les moins volatils du gaz, c'est-à-dire pour du gaz naturel liquéfié des hydrocarbures présentant la chaîne carbonée la plus longue. Compte-tenu de sa volatilité plus faible, la fraction lourde du gaz est au moins partiellement susceptible de demeurer en phase liquide ou de se condenser à l'intérieur des enceintes de vaporisation 14 du dispositif de vaporisation 4. Il convient donc d'équiper le dispositif de vaporisation 4 d'un dispositif de récupération de la fraction lourde 24 afin d'éviter une saturation de l'enceinte de vaporisation 14 en fraction lourde.

Afin de permettre cette récupération de la fraction lourde en phase liquide, les enceintes de vaporisation 14 présentent une pente permettant au liquide de s'écouler par gravité et de le diriger vers un réceptacle 25 disposé en un point bas de la pente. Pour une application sur structure flottante, l'enceinte de vaporisation sera idéalement orientée selon l'axe le plus stable de cette dernière. Par exemple pour un navire, selon l'axe du navire.

Dans le mode de réalisation de la figure 8, le réceptacle 25 de récupération de la fraction lourde est associé à un conduit d'évacuation 26 équipé d'une pompe 27. Le conduit d'évacuation 26 permet de conduire la fraction lourde vers un dispositif de conditionnement de la fraction lourde, non représenté, destiné à la vaporisation et à la mise en température de cette fraction lourde avant son transfert vers un équipement de production d'énergie.

Dans le mode de réalisation représenté sur la figure 9, le réceptacle 25 de récupération de la fraction lourde est équipé d'un dispositif de chauffage 28, tel qu'un dispositif à résistance(s) électrique(s) ou un échangeur de chaleur assurant un échange de chaleur entre la fraction lourde du gaz en phase liquide et de l'eau de mer ou des gaz de combustion générés par un équipement de production d'énergie. Le dispositif de chauffage permet ainsi de vaporiser la fraction lourde stockée dans le réceptacle 25 de récupération afin de la conduire vers un équipement de production d'énergie via un conduit d'évacuation 26. Le réceptacle 25 ainsi que la conduite d'évacuation 26 sont, dans ce mode de réalisation, thermiquement isolés de manière à limiter le transfert de calories de la phase vapeur de la fraction lourde vers le gaz liquéfié 3 stocké dans la cuve 2 et évitant ainsi la re-condensation de la fraction lourde. Par ailleurs, dans un tel mode de réalisation, le réceptacle 26 de récupération de la fraction lourde est raccordé aux enceintes de vaporisation 14 par l'intermédiaire d'un siphon 29 ou d'un clapet anti-retour permettant d'éviter que la fraction lourde évaporée ne soit réintroduite à l'intérieur des enceintes de vaporisation 14 du dispositif de vaporisation 4.

Dans le mode de réalisation représenté sur la figure 10, le réceptacle 25 est raccordé au circuit de sortie 7. Le circuit de sortie 7 est dans ce cas raccordé à un circuit d'alimentation en fluide, non représenté, via un raccord en Y. Ainsi, il est possible de faire passer un fluide à l'intérieur du circuit de sortie 7, de manière à refouler les lourds vers une canalisation d'évacuation 26 de la fraction lourde. Dans un mode de réalisation, le circuit d'alimentation en fluide peut être raccordé au ciel gazeux de la cuve 2 de manière à refouler les lourds au moyen de gaz en phase vapeur. La canalisation d'évacuation 26 de la fraction lourde est alors raccordée à un dispositif de conditionnement de la fraction lourde. Dans un autre mode de réalisation, le circuit d'alimentation en fluide peut être un circuit d'alimentation en gaz sous forme liquéfié. La canalisation d'évacuation 26 de la fraction lourde peut alors être raccordée à la cuve 2. La fraction lourde est alors rejetée dans la cuve 2.

Par ailleurs, le réceptacle 25 est raccordé à la conduite d'évacuation 26 par l'intermédiaire d'une vanne ou d'un clapet anti-retour 30. D'autre part, le réceptacle 25 est également raccordé aux enceintes tubulaires 14 par l'intermédiaire d'une vanne ou d'un clapet anti-retour 31.

Ainsi, lorsque l'on procède à l'évacuation de la fraction lourde, la vanne ou clapet anti-retour 31 est dans un état fermé alors que la vanne ou clapet anti-retour 30 est dans un état ouvert. La circulation de gaz au travers des enceintes d'évaporation 14 est alors interrompue. A contrario, lorsque la circulation de gaz au travers des enceintes d'évaporation 14 est rétablie, la vanne ou clapet anti-retour 31 est dans un état ouvert alors que la vanne ou clapet anti-retour 30 est dans un état fermé. Ainsi, la vanne ou clapet anti-retour 31 permet de garantir que du gaz en phase vapeur dans l'enceinte de vaporisation 14 ne soit pas conduit vers la cuve 2 lorsque l'on procède à l'évacuation de la fraction lourde et la vanne ou clapet anti-retour 30 permet notamment d'éviter que du gaz liquéfié stocké dans la cuve 2 ne soit pompé vers le réceptacle 25 lorsque la pompe à dépression 9 place le circuit de sortie 7 en dépression.

Une installation 1 de stockage et de refroidissement d'un gaz liquéfié telle que décrite ci-dessus permet de nettement diminuer le taux d'évaporation du gaz liquéfié. L'efficacité d'une telle installation 1 de stockage et de refroidissement dépend du rapport entre les besoins d'alimentation en gaz évaporé du circuit d'utilisation de gaz en phase vapeur 8 et la capacité de la cuve 2. Ainsi, pour des navires méthaniers dont les besoins en gaz naturel sont typiquement de l'ordre de 0.1 à 1.5 kg/s et présentant une capacité de stockage pouvant être supérieure à 150 000 m³, l'évaporation naturelle du gaz naturel liquéfié n'est pas totalement supprimée mais peut tout de même être diminuée de moitié de sorte à atteindre des taux d'évaporation journaliers compris entre 0.04 et 0.06 %. Pour des navires dont l'installation n'a pour but que d'assurer la propulsion du navire, la capacité de la cuve est plus restreinte, par exemple de l'ordre de quelques centaines à quelques milliers de m³, tout en ayant des besoins en gaz naturel similaires à ceux des navires méthaniers, c'est-à-dire de l'ordre de 0.1 à 1.5 kg/s. L'efficacité d'une telle installation permet pour des navires comportant des motorisations présentant une consommation de gaz naturel importante et des cuves de capacité plus restreintes d'obtenir des taux d'évaporation naturelle quasiment nuls.

Sur la figure 12, on a représenté schématiquement l'installation 1 pour illustrer le fait que le dispositif de vaporisation 4 permet de fournir à la fois une puissance frigorifique P au gaz liquéfié contenu dans la cuve 2 et un débit de gaz en phase vapeur Q au circuit d'utilisation 8. Pour le dimensionnement du dispositif de vaporisation 4 et de ses éléments constitutifs, notamment la pompe à dépression 9 et l'enceinte de vaporisation 14, les considérations suivantes peuvent être prises en compte :
- le dimensionnement dépend de la puissance frigorifique souhaitée dans le récipient contenant le gaz liquéfié et/ou du débit de gaz en phase vapeur souhaité dans le circuit d'utilisation, en régime permanent de fonctionnement.

Dans certaines applications, le débit de gaz en phase vapeur souhaité dans le circuit d'utilisation 8 peut être le critère de dimensionnement principal du dispositif de vaporisation 4. A titre illustratif, la puissance moyenne du moteur principal dans des navires hauturiers est typiquement de l'ordre de quelques MW à quelques dizaines de MW. Si le débit de gaz en phase vapeur Q issu du dispositif de vaporisation 4 ne permet pas de produire une puissance frigorifique correspondant à la totalité du besoin dans la cuve de stockage, il est possible de prévoir un dispositif de refroidissement auxiliaire (non représenté) pour apporter un puissance frigorifique auxiliaire Pₐᵤₓ au gaz liquéfié contenu dans la cuve de stockage.

Dans d'autres applications, la puissance frigorifique nécessaire au maintien du gaz contenu dans le récipient à une température inférieure à sa température de vaporisation à pression atmosphérique peut être le critère de dimensionnement principal du dispositif de vaporisation 4, notamment si le besoin de gaz en phase vapeur du circuit d'utilisation 8 est élevé et qu'on ne souhaite pas refroidir de manière excessive le gaz en phase liquide contenu dans le récipient et/ou sur-dimensionner le dispositif de vaporisation 4. Ainsi, si la puissance frigorifique P issue du dispositif de vaporisation 4 ne permet pas de produire le débit de gaz en phase vapeur correspondant à la totalité du besoin dans le circuit d'utilisation 8, il est possible de prévoir un dispositif de vaporisation auxiliaire (non représenté) pour apporter un débit de vapeur auxiliaire Qₐᵤₓ au circuit d'utilisation 8. Dans un mode de réalisation correspondant, le dispositif de vaporisation 4 est employé dans un terminal de regazéification de GNL pour à la fois refroidir la cargaison en phase liquide et fournir une partie du flux de gaz en phase vapeur devant être produit.
- dans l'enceinte de vaporisation, il est souhaitable de vaporiser toute la fraction légère du flux de gaz liquéfié prélevé, c'est-à-dire le méthane dans le cas de gaz naturel liquéfié, afin d'exploiter l'enceinte de vaporisation 14 de manière optimale.
- la puissance frigorifique P obtenue dépend de la combinaison de plusieurs paramètres : débit massique de la pompe à dépression 9 et chaleur latente de vaporisation du gaz liquéfié.
- l'échangeur de chaleur doit être dimensionné pour pouvoir transférer cette puissance frigorifique P au contenu du récipient.

Les installations de stockage et de refroidissement d'un gaz liquéfié représentés sur les figures 13 à 17 diffèrent de celle représentée sur la figure 1 en ce que le dispositif de vaporisation 4 comporte en outre un échangeur de chaleur additionnel 34.

En référence avec la figure 13, l'on observe que l'échangeur de chaleur additionnel 34 est raccordé en amont à l'enceinte de vaporisation 14 et en aval au circuit de sortie 7. En d'autres termes, l'échangeur de chaleur additionnel 34 est disposé entre la sortie de l'enceinte de vaporisation 14 et l'entrée du circuit de sortie 7 de telle sorte que le flux de gaz soit susceptible d'être conduit de l'enceinte de vaporisation 14 vers l'échangeur de chaleur additionnel 34 puis de l'échangeur de chaleur additionnel 34 vers le circuit de sortie 7.

L'échangeur de chaleur additionnel 34 est destiné à être mis en contact avec la phase gazeuse 35 du fluide stocké dans la cuve 2 et vise à échanger de la chaleur entre le flux de gaz prélevé et la phase gazeuse du fluide stocké dans la cuve 2. Afin de permettre un échange avec la phase gazeuse 35 du fluide stocké dans la cuve 2, l'échangeur de chaleur additionnel 35 est disposé dans la portion supérieure de la cuve 2 et est plus particulièrement, au moins partiellement, voire intégralement, au-dessus de la limite maximale de remplissage de la cuve 2. A titre d'exemple, pour des cuves de méthanier, cette limite maximale de remplissage correspond à un remplissage de l'ordre de 98 % du volume de l'espace interne de la cuve 2.

Cet échangeur de chaleur additionnel 34 agit ainsi comme un condenseur permettant de condenser et/ou refroidir une partie de la phase gazeuse 35 issue de l'évaporation naturelle dans la cuve 2. L'échangeur de chaleur additionnel 34 permet ainsi d'augmenter l'échange thermique entre le flux de gaz prélevé dans la cuve 2 et le gaz restant dans la cuve. En effet, l'enceinte de vaporisation 6 n'est pas en mesure de transférer la totalité des calories susceptibles d'être échangées et à la sortie de celle-ci, il existe inévitablement un différentiel, de l'ordre de quelques dixièmes de degré à quelques degrés entre la température du flux de gaz vaporisé, à la sortie de l'enceinte de vaporisation 6, et celle de la phase liquide 3 restant dans la cuve 2. En d'autres termes, le flux de gaz vaporisé quitte l'enceinte de vaporisation 14 à une température inférieure à celle de la phase liquide stocké dans la cuve. Ainsi, l'échangeur de chaleur additionnel 34 permet de tirer profit de ces calories disponibles pour condenser une partie de la phase gazeuse 35 issue de l'évaporation naturelle dans la cuve 2.

A titre d'exemple, en considérant un différentiel de 2°C entre la température du flux de gaz vaporisé, à la sortie de l'enceinte de vaporisation 6, et celle de la phase liquide restant dans la cuve 2, et un débit de 1kg/s, une puissance frigorifique de 4 kW est disponible pour condenser une partie de la vapeur.

De plus, à moins que la cuve 2 ne soit remplie à son niveau de remplissage maximal, la phase gazeuse a tendance à se stratifier à l'intérieur de la cuve de telle sorte que la température de la phase gazeuse dans la portion supérieure de la cuve est bien supérieure à la température d'équilibre de la phase liquide du gaz stocké dans la cuve.

A titre d'exemple, pour du gaz naturel liquéfié stocké à une température de l'ordre de -161 °C, la température de la phase gazeuse est susceptible d'atteindre - 80°C dans la portion supérieure de la cuve 2. Dans ce cas, en considérant que le débit soit de 1 kg/s, une puissance frigorifique bien plus importante, de l'ordre de 165 kW est disponible pour refroidir et condenser une partie de la phase vapeur.

L'échangeur de chaleur additionnel 34 peut notamment présenter une structure analogue à celle des parois d'échange de chaleur 6 de l'enceinte de vaporisation 14. L'échangeur de chaleur additionnel 34 peut notamment être un échangeur à ailettes. Toutefois, il pourra également être envisagé d'utiliser tout autre technologie d'échange de chaleur, tels que des échangeurs à serpentin ou à plaques par exemple. L'échangeur de chaleur additionnel 34 peut également être fixé au mât ou tour de déchargement, tel que décrit et illustré en relation avec la figure 7. Selon un mode de réalisation non représenté, l'enceinte de vaporisation 14 et l'échangeur de chaleur additionnel 34 sont formés l'un à la suite de l'autre dans une même structure d'échange thermique dont une portion immergée assure un échange avec le phase liquide 3 du gaz stocké dans la cuve 2 tandis qu'une portion émergée assure un échange avec la phase gazeuse 35.

Dans le mode de réalisation représenté sur la figure 13, le dispositif de vaporisation 4 comporte en outre une canalisation de dérivation 36 autorisant un court-circuitage de l'échangeur de chaleur additionnel 34. Pour ce faire, le dispositif de vaporisation 4 comporte un premier raccordement à trois voies, qui est ici équipé d'une vanne trois voies 37, qui est raccordé à l'enceinte de vaporisation 14, à la canalisation de dérivation 36 et à l'échangeur de chaleur additionnel 34. La vanne trois voies 37 est apte à prendre sélectivement soit une première position dans laquelle elle conduit le flux de gaz de l'enceinte de vaporisation 14 vers l'échangeur de chaleur additionnel 34, soit une seconde position dans laquelle elle conduit le flux de gaz de l'enceinte de vaporisation 14 vers la canalisation de dérivation 36 afin de court-circuiter l'échangeur de chaleur additionnel 34.

Le dispositif comporte en outre un second raccordement à trois voies raccordant la canalisation de dérivation 36 au circuit de sortie 7 et l'échangeur de chaleur additionnel 34 au circuit de sortie 7. Sur la figure 13, le second raccordement à trois voies est également équipé d'une vanne trois voies 38.

La vanne trois voies 37, et optionnellement la vanne trois voies 38,peuvent notamment être commandées en fonction d'une variable représentative de la pression de la phase gazeuse dans la cuve afin de maintenir une pression de la phase gazeuse 35 inférieure à un seuil de pression. Ainsi, on évite de générer des surpressions susceptibles d'être produites par l'évaporation naturelle du gaz naturel liquéfie stocké à l'intérieur de la cuve et susceptibles d'endommager la cuve 2.

Pour ce faire, selon un mode de réalisation, le dispositif comporte un capteur de mesure, non représenté, apte à délivrer un signal représentatif de la pression de la phase gazeuse 35 à une unité de commande de la vanne trois voies 37.

L'unité de commande compare la pression mesurée à un seuil de pression et actionne la vanne trois voies 37 vers sa première position dans laquelle elle conduit le flux de gaz de l'enceinte de vaporisation 14 vers l'échangeur de chaleur additionnel 34 dès lors que la pression mesurée devient supérieure à un seuil de pression. Au contraire, l'unité de commande actionne le déplacement de la vanne trois voies 37 vers sa seconde position dans laquelle elle conduit le flux de gaz de l'enceinte de vaporisation 14 vers la canalisation de dérivation 36 dès lors que la pression mesurée est inférieure à un second seuil de pression. Ce second seuil de pression peut être identique au premier seuil de pression ou inférieure à celui-ci ce qui permet de générer un phénomène d'hystérésis permettant d'éviter une commutation intempestive de la vanne trois voies 37.

A titre d'exemple, le premier seuil de pression susceptible d'entraîner un déplacement de la vanne trois voies 37 de sa seconde position vers sa première position dans laquelle elle conduit le flux de gaz de l'enceinte de vaporisation 14 vers l'échangeur de chaleur additionnel 34 est de l'ordre de 1200 mbar et le second seuil de pression susceptible d'entraîner un déplacement de la vanne trois voies 37 de sa première position vers sa seconde position dans laquelle elle conduit le flux de gaz de l'enceinte de vaporisation 14 vers la canalisation de dérivation 36 est de l'ordre de 1050 mbar. Ainsi, un tel fonctionnement permet d'assurer que la pression de la phase gazeuse demeure dans une plage de pression déterminée. Ceci est particulièrement avantageux lorsque la cuve est une cuve à membrane dont les membranes d'étanchéité sont susceptibles d'être endommagées en cas de surpressions ou de dépressions importantes.

La figure 14 représente un dispositif de vaporisation 4 qui ne diffère du mode de réalisation de la figure 13 qu'en ce que le second raccordement trois voies raccordant la canalisation de dérivation 36 au circuit de sortie 7 et l'échangeur de chaleur additionnel 34 au circuit de sortie 7 n'est pas équipé d'une vanne trois voies 38, ce qui permet de le simplifier.

Le dispositif de vaporisation représenté sur la figure 15 ne diffère du mode de réalisation de la figure 14 qu'en ce que le premier raccordement à trois voies permettant de raccorder l'enceinte de vaporisation 14, à la canalisation de dérivation 36 et à l'échangeur de chaleur additionnel 34 n'est pas équipé d'une vanne trois voies 37. Toutefois, la canalisation de dérivation 36 est équipée d'une vanne 39 permettant sélectivement d'autoriser ou d'interdire le passage du flux de gaz au travers de la canalisation de dérivation 36. Ainsi, lorsque la vanne 39 est fermée, le flux de gaz est conduit vers l'échangeur de chaleur additionnel 34 alors que lorsqu'elle est ouverte, le flux de gaz est conduit préférentiellement au travers de la canalisation de dérivation 36 en raison de pertes de charges moins importantes au travers de la canalisation de dérivation 36 qu'au travers de l'échangeur de chaleur additionnel 34.

Le dispositif de vaporisation 14 de la figure 16 diffère des modes de réalisation des figures 13 à 15 en qu'il comporte une canalisation de dérivation 40 permettant de détourner, en amont de l'enceinte de vaporisation, tout ou partie du flux prélevé afin de le conduire vers l'échangeur de chaleur additionnel 34 sans qu'il ne passe par l'enceinte de vaporisation 14, la vaporisation de tout ou partie du flux de gaz prélevé s'effectuant alors au travers de l'échangeur de chaleur additionnel 34, celui-ci étant dans ce cas équipé d'un organe de perte de charge. La canalisation de dérivation 40 est, d'une part, raccordée au circuit d'entrée 5, en amont de l'enceinte de vaporisation, et d'autre part, raccordée à l'entrée de l'échangeur de chaleur additionnel 34.

La canalisation de dérivation 36 est équipée d'une vanne 41 associée à un débitmètre 42 permettant de réguler le débit de gaz liquéfié qui est dirigé vers l'échangeur de chaleur additionnel 34 sans passer par l'enceinte de vaporisation 14.

De même, la conduite reliant la sortie de l'enceinte de vaporisation 14 à l'entrée de l'échangeur de chaleur additionnel 34 est également équipée d'une vanne 43 associée à un débitmètre 43 permettant de réguler le débit de gaz liquéfie qui est dirigé de l'enceinte de vaporisation 14 vers l'échangeur de chaleur additionnel 34.

Ainsi, un tel agencement autorise donc l'enceinte de vaporisation 14 et l'échangeur de chaleur additionnel 34 à fonctionner en parallèle. Ce mode de fonctionnement en parallèle est avantageux en ce qu'il permet d'augmenter la vitesse de refroidissement de la cuve et permet ainsi de diminuer rapidement la pression dans le ciel gazeux de la cuve lorsqu'elle dépasse un certain seuil de pression.

Selon un mode de réalisation, les proportions de la partie du flux de gaz prélevé passant par l'enceinte de vaporisation 14 et celle passant par l'échangeur de chaleur additionnel 34 sans passer par l'enceinte de vaporisation 14 sont déterminées en fonction de la pression de la phase gazeuse.

La figure 17 illustre une autre variante de réalisation dans laquelle le dispositif de vaporisation est équipé de deux pompes à dépression 9, 45. L'une des pompes à dépressions 9 est raccordée à la canalisation de dérivation 36 et permet ainsi de commander le débit de gaz circulant au travers de l'enceinte de vaporisation 14 tandis que l'autre pompe à dépression 45 est raccordée à la sortie de l'échangeur de chaleur additionnel 34 et permet ainsi de commander le débit de gaz circulant au travers de l'échangeur de chaleur additionnel 34. Un tel agencement offre une plus grande flexibilité de fonctionnement en permettant de commander de manière totalement indépendante les débits de gaz circulant au travers de l'enceinte de vaporisation 14 et de l'échangeur de chaleur additionnel 34.

En référence à la figure 11, on observe une vue écorchée d'un navire méthanier 70 équipée d'une telle installation de stockage et de refroidissement de gaz naturel liquéfié. La figure 11 montre une cuve étanche et isolée 71 de forme générale prismatique montée dans la double coque 72 du navire. La paroi de la cuve 71 comporte une barrière étanche primaire destinée à être en contact avec le gaz naturel liquéfié contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de gaz naturel liquéfié depuis ou vers la cuve 71.

La figure 11 représente également un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Procédé de refroidissement d'un gaz liquéfié choisi parmi le gaz naturel liquéfié, l'éthane et le gaz de pétrole liquéfié contenu dans l'espace intérieur d'un récipient (2, 19) au moyen d'un dispositif de vaporisation (1) comportant :
- une enceinte de vaporisation (14) agencée dans l'espace intérieur d'un récipient (2, 19) destiné à être rempli de gaz liquéfié (3), l'enceinte de vaporisation (14) comportant des parois d'échange de chaleur (6) permettant un échange de chaleur entre un espace intérieur de l'enceinte de vaporisation (14) et un gaz liquéfié (3) présent dans l'espace intérieur du récipient (2, 19) ;
- un circuit d'entrée (5) comportant une admission débouchant dans l'espace intérieur du récipient (2, 19) pour prélever un flux de gaz liquéfié en phase liquide dans le récipient (2, 19) et un organe de perte de charge (13) débouchant dans l'espace intérieur de l'enceinte de vaporisation (14) afin de détendre le flux de gaz prélevé ;
- un circuit de sortie (7) agencé pour évacuer le flux de gaz prélevé, en phase gazeuse depuis l'enceinte de vaporisation (14) vers un circuit d'utilisation de gaz en phase vapeur (8) ; ledit circuit de sortie (7) comportant une pompe à dépression (9) configurée pour aspirer le flux de gaz dans l'enceinte de vaporisation (14), et le refouler vers le circuit d'utilisation de gaz en phase vapeur (8) et pour maintenir dans l'enceinte de vaporisation (14) une pression absolue inférieure à la pression atmosphérique ; le procédé de refroidissement comportant :
- prélever un flux de gaz liquéfié dans le récipient (2, 19) contenant une quantité de gaz liquéfié devant être refroidi et le conduire vers l'enceinte de vaporisation (14) agencée dans l'espace intérieur du récipient (2, 19) ;
- générer une pression absolue inférieure à la pression atmosphérique à l'intérieur de l'enceinte de vaporisation (14) en aspirant le flux de gaz dans l'enceinte de vaporisation au moyen de la pompe à dépression ;
- effectuer un échange de chaleur à travers les parois (6) de l'enceinte de vaporisation (14) entre le flux de gaz prélevé et détendu dans l'enceinte de vaporisation (14) et le gaz liquéfié (3) contenu dans le récipient (2, 19) de manière à vaporiser le flux de gaz prélevé en absorbant des calories du gaz liquéfié (3) contenu dans le récipient (2, 19) ; et
- conduire le flux de gaz prélevé en phase vapeur vers un circuit d'utilisation de gaz en phase vapeur (8).

2. Procédé selon la revendication 1, dans lequel on maintient une pression absolue comprise entre 120 et 950 mbars, de préférence comprise entre 650 et 850 mbars, à l'intérieur de l'enceinte de vaporisation (14).

3. Dispositif de vaporisation (4) pour le refroidissement d'un gaz liquéfié choisi parmi le gaz naturel liquéfié, l'éthane et le gaz de pétrole liquéfié; ledit dispositif de vaporisation (1) comportant :
- une enceinte de vaporisation (14) agencée dans l'espace intérieur d'un récipient (2, 19) destiné à être rempli de gaz liquéfié (3), l'enceinte de vaporisation (14) comportant des parois d'échange de chaleur (6) permettant un échange de chaleur entre un espace intérieur de l'enceinte de vaporisation (14) et un gaz liquéfié (3) présent dans l'espace intérieur du récipient (2, 19) ;
- un circuit d'entrée (5) comportant une admission débouchant dans l'espace intérieur du récipient (2, 19) pour prélever un flux de gaz liquéfié en phase liquide dans le récipient (2, 19) et un organe de perte de charge (13) débouchant dans l'espace intérieur de l'enceinte de vaporisation (14) afin de détendre le flux de gaz prélevé ;
- un circuit de sortie (7) agencé pour évacuer le flux de gaz prélevé, en phase gazeuse depuis l'enceinte de vaporisation (14) vers un circuit d'utilisation de gaz en phase vapeur (8) ; ledit circuit de sortie (7) comportant une pompe à dépression (9) , le dispositif étant **caractérisé en ce que** la pompe à dépression est configurée pour aspirer le flux de gaz dans l'enceinte de vaporisation (14) et le refouler vers le circuit d'utilisation de gaz en phase vapeur (8), la pompe à dépression étant en outre dimensionnée et configurée de manière à maintenir dans l'enceinte de vaporisation (14) une pression absolue inférieure à la pression atmosphérique.

4. Dispositif selon la revendication 3, dans lequel la pompe à dépression (9) est apte à placer le flux de gaz circulant dans l'enceinte de vaporisation (14) sous une pression absolue comprise entre 120 et 950 mbars.

5. Dispositif selon la revendication 3 ou 4, dans lequel le circuit d'entrée (5) comporte un régulateur de pression (17) en amont de l'organe de perte de charge (13).

6. Dispositif selon l'une quelconque des revendications 3 à 5, dans lequel le circuit d'entrée (5) comporte, en amont de l'organe de perte de charge (13), une pompe additionnelle (33) apte à aspirer le flux de gaz liquéfié en phase liquide et à générer une pression de refoulement supérieure à la pression hydrostatique maximale susceptible d'être atteinte dans l'espace intérieur du récipient (2, 19) au niveau de l'admission du circuit d'entrée (5).

7. Dispositif selon la revendication 6, dans lequel le circuit d'entrée (5) comporte en outre un régulateur de pression (17) agencé en aval de la pompe additionnelle (33) apte à limiter la pression du gaz liquéfié refoulé par la pompe additionnelle (33) dans la conduite d'entrée (5) à une pression seuil inférieure à la pression de refoulement de la pompe additionnelle (33).

8. Dispositif selon l'une quelconque des revendications 3 à 7, dans lequel le circuit d'entrée (5) comporte une pluralité d'organes de perte de charge formés de buses de pulvérisation (13) aptes à pulvériser le gaz liquéfié à l'intérieur de l'enceinte de vaporisation (14).

9. Dispositif selon l'une quelconque des revendications 3 à 8, dans lequel les parois d'échange de chaleur (6) comportent des ailettes (15), destinées à augmenter la surface d'échange de l'enceinte de vaporisation (14).

10. Dispositif selon l'une quelconque des revendications 3 à 9, dans lequel le récipient (2, 19) est une cuve étanche et thermiquement isolante.

11. Navire (70) comportant un dispositif (1) selon la revendication 10, dans lequel le circuit d'utilisation du gaz en phase vapeur (8) est un équipement de production d'énergie.

12. Procédé de chargement ou déchargement d'un navire (70) selon la revendication 11. dans lequel on achemine un fluide à travers des canalisations isolées (73, 79, 76, 81) depuis ou vers une installation de stockage flottante ou terrestre (77) vers ou depuis une cuve du navire (71).

13. Système de transfert pour un fluide, le système comportant un navire (70) selon la revendication 11, des canalisations isolées (73, 79, 76, 81) agencées de manière à relier la cuve (71) installée dans la coque du navire à une installation de stockage flottante ou terrestre (77) et une pompe pour entrainer un fluide à travers les canalisations isolées depuis ou vers l'installation de stockage flottante ou terrestre vers ou depuis la cuve du navire.

## Patentansprüche

1. Verfahren zum Kühlen eines Flüssiggases, welches ausgesucht wird zwischen Flüssigerdgas, Ethan und Flüssiggas, welche im Inneren eines Gefäßes (2, 19) enthalten sind, mittels einer Verdampfungsvorrichtung (1) umfassend:
- einen Verdampfungsbehälter (14), welcher im Inneren eines Gefäßes (2, 19), welches befüllbar mit Flüssiggas (3) ist, angeordnet ist, wobei der Verdampfungsbehälter (14) Wärmeaustauschwände (6) umfasst, welche einen Wärmeaustausch zwischen einem inneren Bereich des Verdampfungsbehälters (14) und einem Flüssiggas (3), welches sich im Inneren des Gefäßes (2, 19) befindet, ermöglichen;
- einen Eingangskreislauf (5) umfassend einen Einlass, welcher in den inneren Bereich des Gefäßes (2, 19) mündet, um einen Flüssiggasstrom in der Flüssigkeitsphase in dem Gefäß (2,19) zu entnehmen und ein Druckabfallmittel (13), welcher in den inneren Bereich des Verdampfungsbehälters (14) mündet, um den entnommenen Gasstrom zu entspannen;
- ein Ausgangskreislauf (7) angeordnet, um den entnommenen Gasstrom in der Gasphase von dem Verdampfungsbehälter (14) zu einem Kreislauf zur Verwendung des Gases in der Dampfphase (8) zuleiten; der Ausgangskreislauf (7) umfasst eine Unterdruckpumpe (9), welche konfiguriert ist, um den Gasstrom in den Verdampfungsbehälter (14) anzusaugen und ihn in Richtung des Kreislaufes zur Verwendung des Gases in der Dampfphase (8) zu lenken und um in dem Verdampfungsbehälter (14) einen absoluten Druck zu halten, welcher niedriger ist als der atmosphärische Druck; das Verfahren zum Kühlen umfasst:
- Entnahme eines Flüssiggasstromes in dem Behälter (2, 19), welcher eine Quantität von Flüssiggas, welches gekühlt werden soll, enthält und Leiten des Flüssiggasstromes in Richtung des Verdampfungsbehälters (14), welcher im inneren Bereich des Gefäßes (2, 19) angeordnet ist;
- Erzeugen eines absoluten Druckes, welcher niedriger ist als der atmosphärische Druck im Inneren des Verdampfungsbehälters (14), durch Ansaugen des Gasstromes im Inneren des Verdampfungsbehälters mittels einer Unterdruckpumpe;
- Ausführen eines Wärmeaustausches durch die Wand (6) des Verdampfungsbehälters (14) zwischen dem entnommenen und in dem Verdampfungsbehälter (14) entspannten Gasstroms und dem Flüssiggas (3), welches in dem Gefäß (2, 19) enthalten ist, sodass der entnommene Gasstrom durch Absorbieren der Energiegehaltes des Flüssiggases (3), welches in dem Behälter (2,19) enthalten ist, verdampft; und
- Leiten des entnommenen Gasstromes in der Dampfphase in Richtung eines Kreislaufes zur Verwendung des Gases in der Dampfphase (8).

2. Verfahren gemäß Anspruch 1, wobei ein absoluter Druck im Inneren des Verdampfungsbehälters (14) zwischen 120 und 950 mbar haltbar ist, vorzugsweise zwischen 650 und 850 mbar.

3. Vorrichtung zur Verdampfung (4) zum Kühlen eines Flüssiggases, welches ausgesucht wird zwischen Flüssigerdgas, Ethan und Flüssiggas; wobei die Vorrichtung zur Verdampfung (1) umfasst:
- einen Verdampfungsbehälter (14), welcher im Inneren eines Gefäßes (2, 19), welches befüllbar mit Flüssigerdgas (3) ist, angeordnet ist, wobei die Verdampfungsvorrichtung (14) Wärmeaustauschwände (6) umfasst, welche einen Wärmeaustausch zwischen einem inneren Bereich des Verdampfungsbehälters (14) und einem Flüssiggas (3), welches sich im Inneren eines Gefäßes (2, 19) befindet, ermöglichen;
- einen Eingangskreislauf (5) umfassend einen Einlass, welcher in den inneren Bereich des Gefäßes (2, 19) mündet, um einen Flüssiggasstrom in der Flüssigkeitsphase in dem Gefäß (2,19) zu entnehmen und ein Druckabfallorgan (13), welcher in den inneren Bereich des Verdampfungsbehälters (14) mündet, um den entnommenen Gasstrom zu entspannen;
- ein Ausgangskreislauf (7) angeordnet, um den entnommenen Gasstrom in der Gasphase von dem Verdampfungsbehälter (14) zu einem Kreislauf zur Verwendung des Gases in der Dampfphase (8) zuleiten; der Ausgangskreislauf (7) umfasst eine Unterdruckpumpe (9), wobei die Vorrichtung **dadurch gekennzeichnet ist, dass** die Unterdruckpumpe konfiguriert ist, um den Gasstrom in den Verdampfungsbehälter (14) anzusaugen und ihn in Richtung des Kreislaufes zur Verwendung des Gases in der Dampfphase (8) zu lenken, wobei die Unterdruckpumpe weiterhin ausgelegt und konfiguriert ist, um in dem Verdampfungsbehälter (14) einen absoluten Druck zu halten, welcher niedriger ist als der atmosphärische Druck.

4. Vorrichtung gemäß Anspruch 3, wobei die Unterdruckpumpe (9) dazu geeignet ist, den Gasstrom, welcher in dem Verdampfungsbehälter zirkuliert, unter einen absoluten Druck zwischen 120 und 950 mbar zu versetzen.

5. Vorrichtung gemäß Anspruch 3 oder 4, wobei der Eingangskreislauf (5) einen Druckregler (17), welcher dem Druckabfallmittel (13) vorgelagert ist, umfasst.

6. Vorrichtung gemäß einem der Ansprüche 3 bis 5, wobei der Eingangskreislauf (5) vorgelagert zum Druckabfallmittel (13) eine zusätzliche Pumpe (33) umfasst, welche dazu geeignet ist, den Flüssiggasstrom in der Flüssigkeitsphase anzusaugen und einen Auslassdruck zu erzeugen, welcher höher ist als der maximale hydrostatische Druck, welcher im Inneren des Gefäßes (2, 19) auf Höhe des Einlasses des Eingangskreislaufes (5) erreicht werden kann.

7. Vorrichtung gemäß Anspruch 6, wobei der Einlasskreislauf (6) weiterhin einen Druckregler (17), welcher nach gelagert zur zusätzlichen Pumpe (33) angeordnet ist, umfasst, der dazu geeignet ist, den Druck des Flüssiggases, welches von der zusätzlichen Pumpe (33) in die Einlassleitung (5) lenkbar ist, auf eine Druckschwelle niedriger als den Auslandsdruck der zusätzlichen Pumpe (33) zu begrenzen.

8. Vorrichtung gemäß einem der Ansprüche 3 bis 7, wobei der Eingangskreislauf (5) eine Vielzahl von Druckabfallmittel umfasst, welche aus Sprühdüsen (13) gebildet sind und dazu geeignet sind, das Flüssiggas im Inneren des Verdampfungsbehälters zu sprühen (14).

9. Vorrichtung gemäß einem der Ansprüche 3 bis 8, wobei die Wärmeaustauschwände (6) Flügel (15) umfassen, welche dazu bestimmt sind, die Austauschfläche des Verdampfungsbehälters (14) zu erhöhen.

10. Vorrichtung gemäß einem der Ansprüche 3 bis 9, wobei das Gefäß (2, 19) ein dichtes wärmeisolierendes Gefäß ist.

11. Schiff (70) umfassend eine Vorrichtung (1) gemäß Anspruch 10, wobei der Kreislauf zur Verwendung des Gases in der Dampfphase (8) eine Energieerzeugungsanlage ist.

12. Verfahren zur Be- oder Entladung eines Schiffes (70) gemäß Anspruch 11, wobei eine Flüssigkeit von oder zu einer schwimmenden oder erdverbundenen Speicheranlage (77) zu oder von dem Gefäß des Schiffes (71) durch isolierte Rohrleitungen (73, 79, 76, 81) geleitet wird.

13. Transfersystem für eine Flüssigkeit, wobei das System ein Schiff (70) gemäß Anspruch 11, isolierte Rohrleitungen (73, 79, 76, 81), welche so angeordnet sind, dass sie das in der Hülle des Schiffes angeordnete Gefäß (71) mit einer schwimmenden oder erdverbundenen Speicheranlage (77) verbinden, und eine Pumpe umfasst, um eine Flüssigkeit durch isolierte Rohrleitungen von oder zu der schwimmenden oder erdverbundenen Speicheranlage zu oder von dem Gefäß des Schiffes zuleiten.

## Claims

1. A method for cooling a liquefied gas chosen from liquefied natural gas, ethane and liquefied petroleum gas contained in the interior space of a container (2, 19) by means of a vaporization device (4) for cooling a liquefied gas; said vaporization device (1) comprising:
- a vaporization chamber (14) arranged in the interior space of a container (2, 19) intended to be filled with liquefied gas (3), the vaporization chamber (14) comprising heat exchange walls (6) allowing an exchange of heat between an interior space of the vaporization chamber (14) and a liquefied gas (3) present in the interior space of the container (2, 19);
- an inlet circuit (5) comprising an intake emerging in the interior space of the container (2, 19) for withdrawing a flow of liquefied gas in liquid phase from the container (2, 19) and a head loss member (13) emerging in the interior space of the vaporization chamber (14) in order to expand the withdrawn gas flow;
- an outlet circuit (7) arranged to evacuate the withdrawn gas flow, in gaseous phase from the vaporization chamber (14) to a vapor phase gas usage circuit (8); said outlet circuit (7) comprising a vacuum pump (9) configured for sucking the gas flow into the vaporization chamber (14), discharging it to the vapor phase gas usage circuit (8) and maintaining an absolute pressure lower than atmospheric pressure in the vaporization chamber (14), the cooling method comprising:
- withdrawing a flow of liquefied gas in the container (2, 19) containing a quantity of liquefied gas having to be cooled and conducting it to a vaporization chamber (14) arranged in the interior space of the container (2, 19);
- generating an absolute pressure lower than atmospheric pressure inside the vaporization chamber (14);
- effecting a heat exchange through the walls (6) of the vaporization chamber (14) between the gas flow withdrawn and expanded in the vaporization chamber (14) and the liquefied gas (3) contained in the container (2, 19) so as to vaporize the withdrawn gas flow by absorbing calories from the liquefied gas (3) contained in the container (2, 19); and
- conducting the withdrawn gas flow in vapor phase to a vapor phase gas usage circuit (8).

2. The method as claimed in claim 1, in which an absolute pressure lying between 120 and 950 mbar, preferably lying between 650 and 850 mbar, is maintained inside the vaporization chamber (14).

3. A vaporization device (4) for cooling a liquefied gas; said vaporization device (1) comprising:
- a vaporization chamber (14) arranged in the interior space of a container (2, 19) intended to be filled with liquefied gas (3), the vaporization chamber (14) comprising heat exchange walls (6) allowing an exchange of heat between an interior space of the vaporization chamber (14) and a liquefied gas (3) present in the interior space of the container (2, 19);
- an inlet circuit (5) comprising an intake emerging in the interior space of the container (2, 19) for withdrawing a flow of liquefied gas in liquid phase from the container (2, 19) and a head loss member (13) emerging in the interior space of the vaporization chamber (14) in order to expand the withdrawn gas flow;
- an outlet circuit (7) arranged to evacuate the withdrawn gas flow, in gaseous phase from the vaporization chamber (14) to a vapor phase gas usage circuit (8); said outlet circuit (7) comprising a vacuum pump (9), the vaporization device being **characterized in that** the vacuum pump (9) is configured for sucking the gas flow into the vaporization chamber (14), discharging it to the vapor phase gas usage circuit (8), the vacuum pump being further dimensioned and configured for maintaining an absolute pressure lower than atmospheric pressure in the vaporization chamber (14),

4. The device as claimed in claim 3, in which the vacuum pump (9) is capable of placing the gas flow circulating in the vaporization chamber (14) under an absolute pressure of between 120 and 950 mbar.

5. The device as claimed in claim 3 or 4, in which the inlet circuit (5) comprises a pressure regulator (17) upstream of the head loss member (13).

6. The device as claimed in any one of claims 3 to 5, in which the inlet circuit (5) comprises, upstream of the head loss member (13), an additional pump (33) capable of sucking the flow of liquefied gas in liquid phase and of generating a discharge pressure greater than the maximum hydrostatic pressure likely to be reached in the interior space of the container (2, 19) at the intake of the inlet circuit (5).

7. The device as claimed in claim 6, in which the inlet circuit (5) further comprises a pressure regulator (17) arranged downstream of the additional pump (33) capable of limiting the pressure of the liquefied gas discharged by the additional pump (33) in the inlet duct (5) to a threshold pressure lower than the discharge pressure of the additional pump (33).

8. The device as claimed in any one of claims 3 to 7, in which the inlet circuit (5) comprises a plurality of head loss members formed from spray nozzles (13) capable of spraying the liquefied gas inside the vaporization chamber (14).

9. The device as claimed in any one of claims 3 to 8, in which the heat exchange walls (6) comprise fins (15), intended to augment the exchange surface of the vaporization chamber (14).

10. The device as claimed in any one of claims 3 to 9, in which the container (2, 19) is a tight and thermally insulating tank.

11. A ship (70) comprising a device (1) as claimed in claim 10 and in which the vapor phase gas usage circuit (8) is an energy production unit.

12. A method for loading or offloading a ship (70) as claimed in claim 11, in which a fluid is routed through insulated lines (73, 79, 76, 81) from or to a floating or onshore storage installation (77) to or from a tank (71) of the ship.

13. A transfer system for a fluid, the system comprising a ship (70) as claimed in claim 11, insulated lines (73, 79, 76, 81) arranged so as to link the tank (71) installed in the hull of the ship to a floating or onshore storage installation (77) and a pump for driving a fluid through the insulated lines from or to the floating or onshore storage installation to or from the tank of the ship.
